# EUROPEAN PATENT SPECIFICATION

(11) **EP 4 612 563 B1**
(45) Date of publication and mention of the grant of the patent: **15.07.2026**
(21) Application number: 23805135.3
(22) Date of filing: 02.11.2023
(51) Int. Cl.: G05D 1/20

(54) **CONTROLLING A MANAGED SPACE**
STEUERUNG EINES VERWALTETEN RAUMS
CONTRÔLER UN ESPACE GÉRÉ

(30) Priority: 02.11.2022 GB 202216309
(43) Date of publication of application: 10.09.2025
(73) Proprietor: Slink-Tech Ltd, Bristol BS1 4DZ (GB)
(72) Inventor: JAMES, Sven, Bristol Bristol BS1 4DZ (GB); PEVERE, Nicolas, Bristol Bristol BS1 4DZ (GB); GOUDIE, John, Bristol Bristol BS1 4DZ (GB)
(74) Representative: Script Intellectual Property LLP
(86) International application number: PCT/GB2023/052862
(87) International publication number: WO 2024/095004

(56) References cited:
- EP-B1- 3 177 527

## Description

### FIELD OF THE INVENTION

The present invention relates to a method and apparatus for operating or controlling a managed space.

### BACKGROUND

Techniques for operating or controlling a managed space are known. Although techniques exist, they have shortcomings. Accordingly, it is desired to provide an improved technique for operating or controlling a managed space.

EP 3 177 527 B1 discloses systems and methods for mobile geo-fencing. Numerous different embodiments are disclosed. In overview, users control corresponding UAVs and those are authenticated with air control systems that may include a flight supervision module, a flight regulation module, a traffic management module, a user access control module and UAV access control module. The air control system manages the application of different flight regulations which apply to UAVs depending on their location and status. The traffic management module is configured to receive a request for a resource from the user and to plan a flight course in response to the request which utilises the allocated resources.

### SUMMARY

According to a first aspect, there is provided a computer-implemented method as claimed in claim 15.

The first aspect recognizes that a problem with existing techniques for operating a managed space is that they can have a variety of shortcomings, particularly as a result of changing circumstances, they can be inflexible and so can limit the throughput that is achievable and typically have minimum sized space constraints. For example, in an airport scenario, typically spaces within the airport managed space are permanently designated or created for specific purposes such as runways, helipads, taxiways, stands and the like. This permanent designation of space within the managed space limits the throughput and flexibility achievable.

Accordingly, a method of operating a managed space is provided. The method may be a computer implemented method or a method performed by a computing apparatus. The managed space may be for use by at least one mobile entity. In response to or following a request message received or conveyed from a requester that at least one mobile entity requires to utilize the managed space for a time period to perform a mission, the method may comprise identifying undesignated space within the managed space during the time period of the mission and designating space from within the undesignated space by creating, establishing or allocating at least one zone from within the undesignated space for at least the time period of the request for use by the mobile entity and/or other involved entities during the mission. In this way, in contrast to existing approaches which pre-designate space or fixed areas for typical often repeating purposes or uses and then allocate that pre-designated space when required to be used (and subsequently reused) for just that purpose or use, none of the managed space needs to be designated and instead zones are created from the undesignated space as and when they are required for use to perform typically a single mission by the mobile entity and/or involved entities as requested by the requester.

A mission may be a series of actions towards one or more related goals. In particular, a mission may be a series of movements, actions and other activities done by mobile entities to accomplish a defined objective, potentially interacting with each other and other static entities.

A managed space may be a three-dimensional bounded volume in space, which encompasses ground space and may encompass an associated air space. In some embodiments, the managed space is a space that is monitored by one or more sensors, which may include optical, RF, infrared sensors and the like.

A creation, establishment or allocation of a zone may be the reservation of a portion of the undesignated space for a time period.

An entity may be any animate or inanimate object.

One or more entities, not necessarily all mobile entities, may perform the mission or portion(s) of the mission and the creating may comprise creating, establishing or allocating at least one zone for use by the one or more entities either sequentially or concurrently during the mission. The zones may be created, established or allocated based on the type of the involved entity(ies) and/or the mission to be performed. Zones may be repurposed dynamically for different parts of the mission. The creation, configuration and update of such zones in real-time is safer (for example in response to emergencies, a change of conditions, or hardware/software/user issues) and does not limit operations (for example restricted to particular purposes or usages) compared to arrangements having typically fixed or predetermined configurations based on predictions, on a best/worst case scenario and/or on a maximum size/time needed.

The undesignated space may be space within the managed space that has not been predesignated, preconfigured, preselected, predefined or chosen, for a particular use or purpose. Typically, the undesignated space is empty, vacant, bare or unoccupied space within the managed space at a given time. That undesignated space may be not currently designated, selected, chosen or defined as being space that is to be used to perform a mission.

The undesignated space at a given time may be the same space at another time that can be designated for different uses, purposes or missions. That is to say that any of the space within the managed space can be used or reused for any different purposes or missions. Such an approach is preferable to arrangements using single-purpose zones/areas which are less safe (for example, for personnel, passengers) and less economic (for example, for fuel use) as it requires entities to move between areas. The zones may be multi-purpose, for example the zone may be designated for an entity which lands for disembarkment of passengers and then may be also used for loading of cargo. Similarly , two UAVs with different purposes, such as carrying passengers and carrying cargo, would not need to move from their landing spots to parking spots and then to take-off spots for new passengers or cargo. Hence this provides increased safety for passengers and delivery personnel to embark, disembark, load or unload cargo; as well as reducing the carbon footprint and fuel use of the vehicles.

The method may comprise identifying undesignated space within the managed space during the time period of the mission and creating or establishing or allocating the at least one zone from within the undesignated space for at least the time period of the request for use by the entity and/or other involved entities during the mission.

The undesignated space may comprise space within the managed space which has yet to be designated for use by any entity for at least the time period. Hence, the undesignated space may be space within the managed space which is currently undesignated for use within the time period.

The undesignated space may comprise space within the managed space which is not designated for use by an entity outside of at least the time period. Hence, the undesignated space may be space within the managed space which remains undesignated, other than within the time period.

The zone may be created for at least the time period. Typically, the time period defines a start time, a duration and/or an end time. The duration may be derived from the type of the mission and/or the type of the entity or entities involved in the mission and/or the operating conditions.

The zone may be created from a start time and extend for at least the duration of the time period.

The zone may be created for a buffer period extending at least one of prior to and after the time period. The buffer period may provide for the creation of a zone prior to the requested time and/or for continuing beyond the requested time period. In other words, zones may be created before the requested time but only for related tasks to the mission requested by the requester (e.g. enough time for approach, departure or in the case of a package being brought before the drone arrives, etc.) but not typically for early arrival/late departure more than the expected time for those actions. Should a situation like that occur (early arrival of the mobile entity, etc.) then typically a zone is updated or a new zone is created.

The zone may be positioned at a location which fails to overlap with other zones concurrently. Hence, each zone may be located so that the space is not shared by more than one zone at the same time.

The method may comprise removing the zone and returning the zone to the undesignated space following expiry of the time period. Accordingly, zones may be eliminated and the space restored to being undesignated space once the time period has expired and/or when the zone is no longer required to perform the particular mission requested by the requester. The space that was previously used as the zone which has been returned to being undesignated space can then be reused for any purpose in response to a subsequent request to perform a different mission. In other words, the zone is typically created in response to a request to perform a particular mission, used to perform that mission and then removed - this prevents use of that zone for a subsequent mission, instead another zone will be created to perform that subsequent mission. It will be appreciated that the time period of the zone can be updated while in use, for example following a risk response, and so the zone would not be removed following the expiry of the initial time period.

The method may comprise removing the zone and returning the zone to the undesignated space following receiving a confirmation message that at least a portion of the mission which requires this zone is at least one of complete, cancelled and rescheduled. Accordingly, once that portion of the mission using that zone has completed, cancelled or rescheduled to another time then the zone may be removed.

However, that zone may be retained or repurposed if required by another portion of the mission or if updated while in use, for example following a risk response.

The request message may identify at least one of: a mobile entity type; the time period that the managed space is required; and a mission type. Hence, the information within the request message may help inform what type of zone, its configuration and/or when the zone is required as well as identification of the mobile entity type. The request message may also identify other entities involved in the mission.

Typically, the request message would include an identification of the mobile entity.

The method may comprise deriving the time period that the managed space is required from at least one of the entity type and the mission type. The time period that the managed space is required may be derived from a time reference. The information within the message regarding the type of entity and/or the mission type to be performed may be used to infer the time period for which the zone is required.

The entity or involved entity may be one of a mobile and a static entity.

The mobile entity may comprise at least one of an air-based entity and a ground-based entity.

The air-based entity may be at least one of an autonomous air vehicle and a piloted air vehicle.

The ground-based entity may comprise at least one of: an operative; a customer; an autonomous ground vehicle; and a driven ground vehicle. Accordingly, the ground-based entity may be a person and/or a ground vehicle.

The static entity may be one of a moveable ground item and a fixed ground item. Accordingly, the static-entity may be a package, a cargo, a charging equipment, a loading device, maintenance material, or a part of the infrastructure such as a sensor.

An entity not involved in missions may be one of: an air-based entity; a ground-based entity; debris; foreign object; person; animal and miscellaneous flying or grounded item.

The managed space may comprise airspace extending above ground space. Hence, the managed space may include an area of ground together with an amount of airspace above that ground. Hence, the managed space may extend over an area of ground space. The managed space may also extend into the airspace from the ground space. The airspace may extend from the ground space in a direction other than directly vertical from the ground space, such as, for example, the column of airspace may be sloped or tilted. Also, the cross-sectional area of the column of airspace may vary at different altitudes. For example, the column of airspace may have a greater cross-sectional area at a higher altitude than at a lower altitude or vice versa.

The zone may be dimensioned to occupy a defined amount of ground space and preferably an associated column of airspace extending from the ground space. Hence, each zone may extend over an area of ground space. The zone may also extend into the airspace from the ground space. The amount of ground space and preferably the associated column of airspace extending from the ground space is typically dimensioned based on the type and/or the size of the entity or entities involved in the mission and/or the nature of the mission and the operating conditions. Typically, the dimensions are selected to fully accommodate the entity or entities involved in the part of the mission using that zone. The airspace may extend from the ground space in a direction other than directly vertical from the ground space, such as, for example, the column of airspace may be sloped or tilted. Also, the cross-sectional area of the column of airspace may vary at different altitudes. For example, the column of airspace may have a greater cross-sectional area at a higher altitude than at a lower altitude or vice versa.

The associated column of airspace may extend for a specified or defined altitude. Hence, the column of airspace may not extend to the full height of the managed space.

When the mobile or involved entity is an air-based entity, the zone may comprise a take-off/landing zone. Other types of zones mentioned may also be provided for air-based entities.

The request message may comprise an indication of a type of the air-based entity and the take-off/landing zone may be dimensioned based on the type of the air-based entity. Hence, different configuration take-off/landing zones may be provided for different types of entities.

The take-off/landing zone may be dimensioned to occupy a defined shape of ground space which extends to at least a footprint of the air-based entity. Hence, the ground space may encompass the extent of the air-based entity in order that the air-based entity can be fully positioned within the ground space.

The take-off/landing zone may be dimensioned to occupy a defined shape of ground space which extends to at least a footprint of a package to be delivered or transported by the air-based entity. Hence, the ground space may be dimensioned to fully encompass a package being delivered or transported by the air-based entity.

When the mobile or involved entity is a ground-based entity, the zone may comprise a utility zone. Other types of zones mentioned may also be provided for ground-based entities.

When the mission type comprises one of staging, maintenance and charging, the zone may comprise a corresponding one of a staging zone dimensioned to accommodate storage, a maintenance zone dimensioned to accommodate maintenance and a charging zone dimensioned to accommodate charging, each dimensioned to occupy a defined amount of ground space and an associated column of airspace extending from the ground space. Typically, the height of the column of airspace may be selected to be as tall as the involved entity or entities typically with a safety buffer.

The method may comprise creating at least one transit zone, each dimensioned to occupy a defined amount of ground space connecting with at least one zone and an associated column of airspace extending from the ground space. Hence, transit zones may be provided to enable entities to transit or move, typically on or close to the ground, within the managed space. Transit zones may typically connect two other zones together and/or connect a zone to a side and/or to outside of the managed space.

The column of airspace may extend from the staging, maintenance, charging and transit zones with a lower altitude than the column of airspace extending from the take-off/landing zone.

The method may comprise creating at least one emergency zone within the managed space. The emergency zone may be created when needed, in an absence of any request by a requester. Alternatively, the method may comprise failing to designate space from the undesignated space so that space can be used as an emergency zone, if required. In other words, the method may comprise not allocating an amount of undesignated space for use as an emergency zone should a request for an emergency zone be received or generated. Hence, space within the managed space may be not allocated to always enable allocations of emergency zones for events such as landing to occur.

The method may comprise locating at least one emergency zone furthest away from any mobile entities within the managed space.

The method may comprise creating a plurality of the zones in response to the request message. Hence, a single request may cause a number of zones to be created to enable the mobile entity (or other entities involved in the mission) to perform different parts of the mission.

The method may comprise, in response to receiving a plurality of the request messages, creating a plurality of the zones. Accordingly, more than one zone may be created for more than one mission.

The creating the plurality of zones may locate each zone to prevent simultaneously occupying overlapping space. Hence, each zone may occupy exclusively its own ground and/or airspace. The zones may in some circumstances adjoin, abut, touch or be adjacent to each other. The zones may occupy the same space for different missions but without temporal overlap.

The method may comprise positioning each zone at a location which fails to overlap with other zones.

The method may comprise repositioning at least one zone when a change in a dimension of a zone would result in an overlap between zones. Accordingly, the positions of some zones may be adjusted in order to prevent an undesirable overlap between zones occurring.

The method may comprise changing the position, size and/or layout of at least one zone when a change in a position and/or creation of a zone would result in an overlap between zones. Accordingly, the positions of some zones may be adjusted in order to prevent an undesirable overlap between zones occurring. The position and/or size of a zone may be changed while in use, for example when an entity is inside the zone. Such a change in position may occur, for example, in response to a change in operating conditions or a change of the risk weight score.

The method may comprise, in response to operating condition information provided by at least one sensor, varying or modifying at least one dimension of the zone. Hence, the size of the zone may be varied dynamically in response to information provided by at least one sensor. In other words, the dimensions of the zone may be adjusted in use.

The operating condition information may comprise at least one of: environmental conditions; involved entity status; sensor status and/or controller status and managed space conditions.

The modifying the zone may comprise enlarging the zone at least in a wind direction. Hence, the zone may be increased in dimension in a direction that the mobile entity is likely to be blown in.

The modifying the zone may comprise changing a dimension of a zone and/or its location in response to the related part of the mission completing. The modifying the zone may comprise reducing a dimension of the zone when the associated mission is during the portion in which the mobile entity or entities are stationary and/or parked in that zone. The modifying the zone may comprise enlarging a dimension of the zone when the associated mission is during the portion in which a mobile entity is entering or leaving that zone.

For example, a zone may have an initial dimension and/or location to enable an initial part of the associated mission to occur. Once that initial part of the mission has completed, then the dimension and/or location of the zone may be adjusted for a next part of the mission. Once that next part of the mission has completed, then the dimension and/or location of the zone may be adjusted again for a further part of the mission, and so on.

The method may comprise modifying at least one dimension and/or location of the zone when at least one of: the environmental conditions indicate a change in prevailing weather or visibility; an involved entity status, sensor status and/or controller indicates a change in positioning accuracy or a change in mission status; the managed space conditions indicate a change in density of entities and/or a change in the performance of the sensor or the controller. Accordingly, the dimensions and/or location of the zone may be varied due to changes in the weather, uncertainty about positioning accuracy, a change in the mission status, a change between parts of the associated mission, changes in numbers of entities and/or a change in the status or operational condition of a sensor and/or the controller. In other words, the dimensions of the zone may be adjusted while in use, for example when an entity is inside the zone.

The method may comprise allocating at least one permission to the managed space. Hence, an indication of entities permitted to be present within the managed space may be provided typically when a request is made.

The method may comprise allocating at least one permission to each zone. Accordingly, an indication of the entities permitted to be present in each zone may be provided.

The at least one permission may identify at least one entity permitted to be present in at least one of the managed space and each zone. The permission may identify a unique entity or a type of entity.

The method may comprise monitoring the managed space using sensors to detect presence of any entities. Accordingly, the sensors may be used to identify and locate entities within the managed space.

The method may comprise monitoring the managed space by receiving signals from entities in a vicinity of the managed space to detect presence of any entities. The method may comprise monitoring the managed space by receiving signals from entities in a vicinity of the managed space to detect at least one of a location and status of any entities. Accordingly, signals may be received from the entities themselves in or nearby the managed space and these signals used to detect those entities within the managed space and to determine environmental or operating conditions.

The method may comprise monitoring the managed space by imaging and/or using 2D and/or 3D sensors which may include optical, RF, infrared sensors and the like to detect presence of any entities in a vicinity of the managed space.

The method may comprise determining an identity of any detected entities. The determination may be by the sensors or from signals received from the entities themselves.

The method may comprise determining a location of any detected entities. The determination may be by the sensors or from signals received from the entities themselves.

The method may comprise determining a size of any detected entities. The determination may be by the sensors or from signals received from the entities themselves.

The determining the location may identify at least one of the managed space and zone within which that entity is located.

The method may comprise calculating a risk-weight score for at least one of each zone based on the permission for that zone and the identity of any entity in that zone. Accordingly, a value of risk may be determined for each zone. The risk-weight score may be periodically or continuously updated. The risk-weight score may be determined from the permissions allocated for that zone and the identity of any entity within that zone. Typically, the risk-weight score has a value along a scale. At one end of the scale, the risk is lowest. At the other end of the scale, the risk is highest. For example, should no entity be present in a zone, then the risk may be judged to be lowest. Should an entity be present in a zone, and that entity has permission to be in that zone, then the risk may be judged to be intermediate. Should an entity be present in a zone, and that entity does not have permission to be in that zone, then the risk may be judged to be higher. Should an entity be present in a zone, and that entity does not have permission to be in that zone but another entity is also in the zone, then the risk may be judged to be highest. One or more thresholds may be located along the scale which classify the risk-weight score, with the different classification causing different actions. The thresholds may differ for different zones and/or for different operating conditions. For example, in a lowest classification, no action might be taken. In an intermediate classification, no action might be taken. In a higher classification, action might be taken to remove the entity and/or to halt missions of other entities. In a highest classification, action might be taken to remove the entity and/or to cancel missions of other entities. The same approach may also be applied to risk-weight score(s) for the managed space or undesignated space in the managed space.

The method may comprise modifying a risk-weight score for at least one of each zone based on operating conditions. The operating conditions may comprise at least one of: environmental conditions, location certainty, involved entity status, mission status, sensor status, controller status, managed space conditions and the like.

The risk-weight score for a zone may be calculated to be lower when no entity is present in that zone compared to when an entity is present in that zone. Accordingly, the risk-weight zone may be at its lowest when no entity is present in that zone.

The risk-weight score for a zone may be calculated to be higher when an unidentified involved entity is present in that zone compared to when no unidentified entity is present in that zone and no permission has been allocated for unidentified entities to be present in that zone. Some entities may be identifiable by the controller from information provided by the sensors and/or by the entities themselves, such as a vehicle communicating its identity or an involved person with an identifying tag. Other entities may be unidentifiable such as, for example, an involved person without an identifying tag, or a person, vehicle or object not involved. The presence of an unidentified entity within a zone may increase the risk-weight score for that zone.

The identifying tag may be an Internet of Things tag, or a device communicating with sensors in the managed space and/or with external sensors.

The risk-weight score for a zone may be calculated to be an intermediate amount when an identified entity is present in that zone and permission has been allocated for that identified entity to be present in that zone. Accordingly, the risk-weight score may increase when an entity which has permission is present within a zone.

The risk weight score for a zone may be calculated to be a higher than intermediate amount when identified entities are present in that zone and no permission has been allocated for these entities to be present at the same time in that zone.

When the risk-weight score fails to exceed an unsafe threshold amount, the mission associated with that zone may be permitted to continue as planned. Accordingly, when the risk-weight score is below an unsafe threshold amount, the mission within that zone may be approved.

When the risk-weight score exceeds an unsafe threshold amount, the mission associated with that zone may be prevented from continuing as planned. Accordingly, when the risk-weight score is above the unsafe threshold amount then the mission may be prevented from continuing as planned. The mission may be updated by modifying or updating the allocations of the zones associated to the mission to reduce the risk-weight score. A mission may be cancelled when the entity associated with that mission is not yet present in the zone.

The mission associated with that zone may be prevented from continuing as planned by signalling one of halt and divert. The signalling one of halt and divert is typically sent to at least one or all of the entities involved in the mission. Alternatively, or additionally, a confirmation signal that may be sent to the involved entity or entities confirming that the mission may continue may be stopped to indicate to the entity or entities that the mission can no longer proceed. In other words, the confirmation signal that otherwise would have been sent may be prevented from being sent when the mission cannot proceed.

The divert may comprise one of diverting to another zone, diverting to another managed space and diverting away from the managed space. The divert may comprise diverting to a zone created or updated to receive the diverted entity.

When the risk-weight score exceeds an unsafe threshold amount, one or more zones may be reconfigured to reduce the risk-weight score. Such reconfiguration may occur dynamically, either periodically or continuously in response to changes in the risk-weight score. The reconfiguration may adjust the position, size, layout and/or timing of the zone to reduce the risk-weight score.

Alternatively, different actions may be taken based on different risk-weight scores.

The requester may comprise at least one of the entity involved in the mission and a mission controller. Hence, the request may be generated by an involved entity and/or by a controller initiating and/co-ordinating missions.

According to a second aspect, there is provided an apparatus as claimed in claim 1.

A mission may be a series of actions towards one or more related goals. In particular, a mission may be a series of movements, actions and other activities done by mobile entities to accomplish a defined objective, potentially interacting with each other and other static entities.

A managed space may be a three-dimensional bounded volume in space, which encompasses ground space and may encompass an associated air space. In some embodiments, the managed space is a space that is monitored by one or more sensors, which may include optical, RF, infrared sensors and the like.

A creation, establishment or allocation of a zone may be the reservation of a portion of the undesignated space for a time period.

An entity may be any animate or inanimate object.

One or more entities, not necessarily all mobile entities, may perform the mission or portion(s) of the mission and the controller may be configured to create, establish or allocate at least one zone for use by the one or more entities either sequentially or concurrently during the mission. The zones may be created, established or allocated based on the type of the involved entity(ies) and/or the mission to be performed. Zones may be repurposed dynamically for different parts of the mission.

The undesignated space may be space within the managed space that has not been predesignated, preconfigured, preselected, predefined or chosen, for a particular use or purpose. Typically, the undesignated space is empty, vacant, bare or unoccupied space within the managed space at a given time. That undesignated space may not be currently designated, selected, chosen or defined as being space that is to be used to perform a mission.

The undesignated space at a given time may be the same space at another time that can be designated for different uses, purposes or missions. That is to say that any of the space within the managed space can be used or reused for any different purposes or missions. The zones may be multi-purpose, for example the zone may be designated for an entity which lands for disembarkment of passengers and then may be also used for loading of cargo. Similarly , two UAVs with different purposes, such as carrying passengers and carrying cargo, would not need to move from their landing spots to parking spots and then to take-off spots for new passengers or cargo.

The controller may be configured to identify undesignated space within the managed space during the time period of the mission and create, establish or allocate at least one zone from within the undesignated space for at least the time period of the request for use by the entity and/or other involved entities during the mission.

The undesignated space may comprise space within the managed space which has yet to be designated for use by any entity for at least the time period.

The undesignated space may comprise space within the managed space which is not designated for use by an entity outside of at least the time period.

The controller may be configured to create the zone for at least the time period.

The controller may be configured to create the zone from a start time and extend for at least the duration of the time period.

The controller may be configured to create the zone for a buffer time period extending at least one of prior to and after the time period.

The controller may be configured to position the zone at a location which fails to overlap with other zones concurrently.

The controller may be configured to remove the zone and to return space associated with the zone to the undesignated space following expiry of the time period.

The controller may be configured to remove the zone and to return space associated with the zone to the undesignated space following receiving a confirmation message that at least a portion of the mission which requires that zone is at least one of complete, cancelled and rescheduled.

The request message may identify at least one of: an entity type; the time period that the managed space is required; and a mission type.

Typically, the request message would include an identification of the entity.

The controller may be configured to derive the time period that the managed space is required from at least one of the entity type and the mission type.

The entity or involved entity may be one of a mobile and a static entity.

The mobile entity may comprise at least one of an air-based entity and a ground-based entity.

The air-based entity may be at least one of an autonomous air vehicle and a piloted air vehicle.

The ground-based entity may comprise at least one of: an operative; a customer; an autonomous ground vehicle; and a driven ground vehicle. Accordingly, the ground-based entity may be a person and/or a ground vehicle.

The static entity may be one of a moveable ground item and a fixed ground item. Accordingly, the static-entity may be a package, a cargo, a charging equipment, a loading device, maintenance material, or a part of the infrastructure such as a sensor.

An entity not involved in missions may be one of: an air-based entity; a ground-based entity; debris; foreign object; person; animal and miscellaneous flying or grounded item. The ground-based entity may comprise at least one of: an operative; a customer; an autonomous ground vehicle; and a driven ground vehicle. Accordingly, the ground-based entity may be a person and/or a ground vehicle.

The static entity may be one of a moveable ground item and a fixed ground item. Accordingly, the static-entity may be a package, a cargo, a charging equipment, a loading device, maintenance material, or a part of the infrastructure such as a sensor.

An entity not involved in missions may be one of: an air-based entity; a ground-based entity; debris; foreign object; person; animal and miscellaneous flying or grounded item.

The managed space may comprise airspace extending above ground space.

The zone may be dimensioned to occupy a defined amount of ground space and preferably an associated column of airspace extending from the ground space.

The associated column of airspace may extend for a specified altitude.

When the mobile or involved entity is an air-based entity, the zone may comprise a take-off/landing zone.

The request message may comprise an indication of a type of the air-based entity and the take-off/landing zone is dimensioned based on the type of the air-based entity.

The controller may be configured to dimension the take-off/landing zone to occupy a defined shape of ground space which extends to at least a footprint the air-based entity.

The controller may be configured to dimension the take-off/landing zone to occupy a defined shape of ground space which extends to at least a footprint of a package to be delivered or transported by the air-based entity.

When the mobile or involved entity is a ground-based entity, the zone may comprise a utility zone.

Other types of zones mentioned may also be provided for ground-based entities.

When the mission type comprises one of staging, maintenance and charging, the zone may comprise a corresponding one of a staging zone dimensioned to accommodate storage, a maintenance zone dimensioned to accommodate maintenance and a charging zone dimensioned to accommodate charging, each dimensioned to occupy a defined amount of ground space and an associated column of airspace extending from the ground space.

The controller may be configured to create at least one transit zone, each dimensioned to occupy a defined amount of ground space connecting with at least one zone and an associated column of airspace extending from the ground space.

The column of airspace may extend from the staging, maintenance, charging and transit zones with a lower altitude than the column of airspace extending from the take-off/landing zone.

The controller may be configured to create at least one emergency zone within the managed space. The emergency zone may be created when needed, in an absence of any request by a requester. Alternatively, the controller may be configured to fail to designate space from the undesignated space so that space can be used as an emergency zone, if required.

The controller may be configured to locate at least one emergency zone furthest away from any mobile entities within the managed space.

The controller may be configured to create a plurality of the zones in response to the request message.

The controller may be configured, in response to receiving a plurality of the request messages, to create a plurality of the zones.

The controller may be configured to locate each zone to prevent simultaneously occupying overlapping space.

The controller may be configured to position each zone at a location which fails to overlap with other zones.

The controller may be configured to reposition at least one zone when a change in a dimension of a zone would result in an overlap between zones.

The controller may be configured to change the position, size and/or layout of at least one zone when a change in a position and/or creation of a zone would result in an overlap between zones.

The controller may be configured, in response to operating condition information provided by at least one sensor, to vary or modify at least one dimension of the zone.

The operating condition information may comprise at least one of: environmental conditions; involved entity status; sensor status and/or controller status and managed space conditions.

The controller may be configured to modify the zone by enlarging the zone at least in a wind direction.

The controller may be configured to modify the zone by changing a dimension of a zone and/or its location in response to the related part of the mission completing. The modifying the zone may comprise reducing a dimension of the zone when the associated mission is during the portion in which the mobile entity or entities are stationary and/or parked in that zone. The modifying the zone may comprise enlarging a dimension of the zone when the associated mission is during the portion in which a mobile entity is entering or leaving that zone. For example, a zone may have an initial dimension and/or location to enable an initial part of the associated mission to occur. Once that initial part of the mission has completed, then the dimension and/or location of the zone may be adjusted for a next part of the mission. Once that next part of the mission has completed, then the dimension and/or location of the zone may be adjusted again for a further part of the mission, and so on.

The controller may be configured to modify at least one dimension and/or location of the zone when at least one of: the environmental conditions indicate a change in prevailing weather or visibility; an involved entity status, sensor status and/or controller indicates a change in positioning accuracy or a change in mission status; the managed space conditions indicate a change in density of entities and/or a change in the performance of the sensor or the controller.

The controller may be configured to allocate at least one permission to the managed space.

The controller may be configured to allocate at least one permission to each zone.

The at least one permission may identify at least one entity permitted to be present in at least one of the managed space and each zone.

The apparatus may comprise sensors configured to detect presence of any entities and wherein the controller may be configured to monitor the managed space using the sensors.

The controller may be configured to monitor the managed space by receiving signals from entities in a vicinity of the managed space to detect presence of any entities.

The controller may be configured to monitor the managed space by imaging and/or using 2D and/or 3D sensors which may include optical, RF, infrared sensors and the like to detect presence of any entities in a vicinity of the managed space.

The controller may be configured to determine an identity of any detected entities.

The controller may be configured to determine a location of any detected entities.

The controller may be configured to determine a size of any detected entities.

The controller may be configured to determine the location by identifying at least one of the managed space and zone within which that entity is located.

The controller may be configured to calculate a risk weight score for at least one of each zone based on the permission for that zone and the identity of any entity in that zone.

The controller may be configured to modify a risk-weight score for at least one of each zone based on operating conditions.

The controller may be configured to calculate the risk weight score for a zone to be lower when no entity is present in that zone compared to when an entity is present in that zone.

The controller may be configured to calculate the risk weight score for a zone to be higher when an unidentified involved entity is present in that zone compared to when no unidentified entity is present in that zone and no permission has been allocated for unidentified mobile entities to be present in that zone.

The controller may be configured to calculate the risk weight score for a zone to be an intermediate amount when an identified entity is present in that zone and permission has been allocated for that identified entity to be present in that zone.

The controller may be configured to calculate the risk weight score for a zone to be a higher than intermediate amount when identified entities are present in that zone and no permission has been allocated for these entities to be present at the same time in that zone.

The controller may be configured, when the risk weight score fails to exceed an unsafe threshold amount, to determine that the mission associated with that zone is permitted to continue as planned.

The controller may be configured, when the risk weight score exceeds an unsafe threshold amount, to determine that the mission associated with that zone is prevented from continuing as planned.

The controller may be configured to prevent the mission associated with that zone from continuing as planned by signalling one of halt and divert.

The divert may comprise one of diverting to another zone, diverting to another managed space and diverting away from the managed space.

The controller may be configured, when the risk-weight score exceeds an unsafe threshold amount, to reconfigure one or more zones to reduce the risk-weight score.

Alternatively, different actions may be taken based on different risk-weight scores.

The requester may comprise at least one of the entity involved in the mission and a mission controller.

According to a third aspect, there is provided a computer program operable, when executed on a computer to perform the method of the first aspect and its optional features set out above.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
FIGS. 1A to 1D illustrates the main steps performed when installing and operating an apparatus according to one embodiment;
FIGS. 2 to 4 illustrate a layout of a managed space according to one embodiment;
FIGS. 5A to 5G illustrate an example operation according to one embodiment;
FIGS. 6A to 6D illustrate an example operation according to one embodiment;
FIGS. 7A to 7K illustrate an example operation according to one embodiment;
FIGS. 8A to 8H illustrate an example operation according to one embodiment; and
FIGS. 9A to 9E illustrate an example operation according to one embodiment.

Before discussing embodiments in any more detail, first an overview will be provided. Some embodiments provide techniques for monitoring and operating a managed space. Requests are received to use the managed space for missions to be performed by entities. The requests may be received from a requestor such as the entities themselves or generated by an operator or wishing to initiate a mission. Typically, the requests identify the mission type and/or the zones required, as well as the entities involved in that mission. By default, space within the managed space is undesignated, unassigned or unspecified space. In other words, typically none of the space within the managed space is pre-designated for use or for a particular use.

In particular, none of the managed space has a pre-assigned or pre-designated usage or purpose (single or multiple) such as pre-existing purpose-built installations, or predefined areas . Instead, the space is only designated for use in response to requests. In response to those requests, a controller dynamically or actively creates zones to be used by the mobile or static entities involved in those missions for the time period of those missions from the undesignated space within the managed space. Each zone location is typically not constrained by pre-existing elements or pre-configuration or by its intended use. Also, each zone size is typically not constrained by pre-existing elements or pre-configuration or by its intended use. Typically, one or more zones are created for each mission and those zones are removed and returned to the undesignated space when the mission completes or is no longer required. In other words, each zone is independent from other zones and missions, and typically only exists for the performance of a particular mission. The purpose of a zone may be changed for different parts of the associated mission, together with changes in its size and/or location. Some zones may be created without being requested. The zones typically include an area of ground space together with some airspace above which extends to an altitude based on the type of zone being created. Zones are typically located to optimize use of the available space and may be grouped or positioned together based on the type of zone being created. Some types of zones may be located as far apart as possible in order to improve safety within the managed space. The size and positions and/or the timing of zones may be varied dynamically, based on current operating conditions which may affect the positioning accuracy of the involved entities, based on the status of the mission (for example, should the mission transition from one part or stage of a mission to another and/or should a priority, type or category of a mission change) and/or the status of sensors and/or the controller and to prevent the spatial and temporal overlap of zones. Typically, zones within the managed space existing during any period of time are positioned to avoid overlapping and to avoid spatial conflict between entities in different zones. Zones (and optionally the managed space itself) are typically allocated permissions which identify which mobile or static entities are permitted to be present within those zones. The managed space containing the zones may also be allocated permissions which identify which mobile or static entities are permitted to be present within the (typically undesignated portions of the) managed space. Risk-weight scores for the zones (and the typically undesignated portions of the managed space) are typically determined based on the presence or otherwise of mobile entities within those zones, the presence or otherwise of static or immobile entities (such as packages, infrastructure or other involved entities or objects) within those zones, the presence or otherwise of entities not involved (such as debris, animal) within those zones, prevailing operating conditions (such as environmental conditions, location certainty, etc.), sensor status and/or controller status together with information on whether those entities are permitted to be within those zones or not, and based on other managed space conditions. Those risk-wight scores can then be used to determine whether missions or other activities should continue as planned, should be abated in some form or even stopped. In some circumstances, when an entity is detected as being present within a zone but which is not permitted to be present within that zone, a mission may be halted, terminated, diverted and/or one or more zones reconfigured to reduce risk-weight score(s) to an acceptable level. In other circumstances, a mission can be allowed to proceed when it is judged that it is still safe to do so. Once a mission has completed, or once a zone is no longer required, the space used for the zone becomes undesignated so that it is available for incorporation into a future zone when required. This arrangement provides for flexible use of the managed space which can lead to improved throughput and safety.

The setup and operation of the apparatus for operating a managed space for use as a so-called vertiport will now be described in more detail.

### Setup

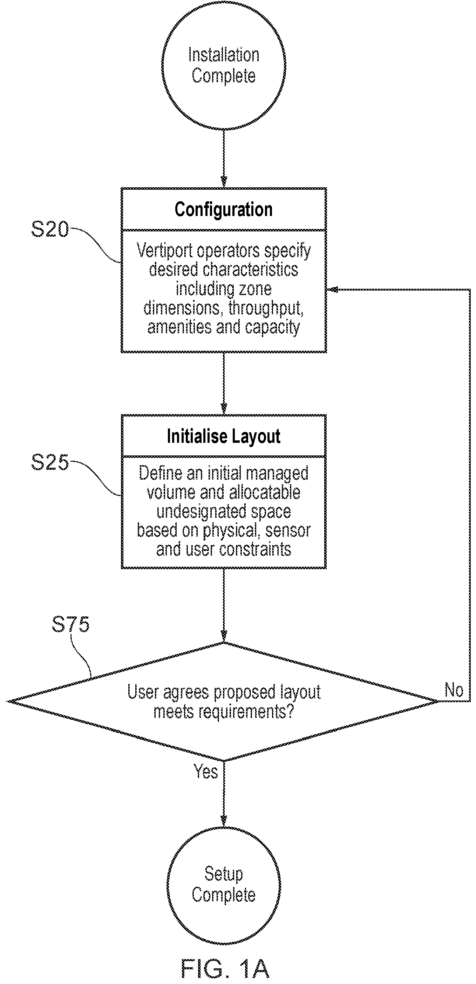

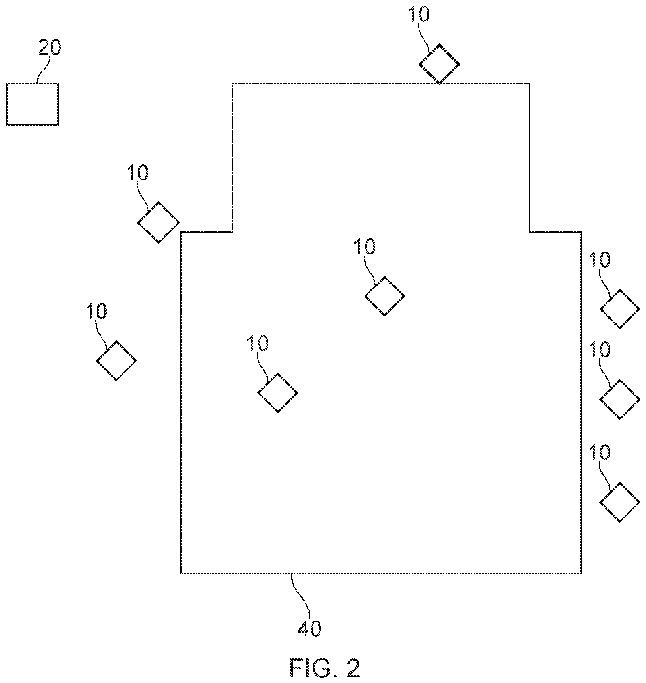

As described in FIG. 1A, the setup begins after the physical infrastructure of the apparatus is installed. In particular, a set of sensors 10 (see FIG. 2) as well as other components such as power supplies and communications equipment (not shown) are deployed at a location where a vertiport is to be established. The controller 20 may be located at the vertiport or elsewhere and communicate with the sensors 10.

At step S20, the controller 20 is configured by the operator to specify operational parameters of the vertiport such as the intended dimensions of the vertiport and its managed space 40, its throughput, amenities, capacity and the like. The shape, size and configuration of the managed space 40 can be selected to suit the location of the vertiport. For example, the managed space 40 may match the shape and be sized to fit within a roof, car park, yard, field or other space within which the vertiport is to be located.

At step S25, the controller 20 initialises the managed space 40. In the example shown in FIG. 2, all of the area can by utilised as the managed space 40. However, some deployments may have obstructions or terrain which cannot be used as the managed space 40 and these may be omitted or excluded as being designable space for zones.

At step S75, the controller 20 seeks confirmation from a user that the layout is acceptable. If it is acceptable, the initialisation then completes and processing proceeds to steps S190, S102 and S110 to await bookings, to create and operate zones and to monitor the managed space 40. However, if the layout is not acceptable and should changes be required, then the initialisation can be performed again and processing returns to step S20.

### Operation

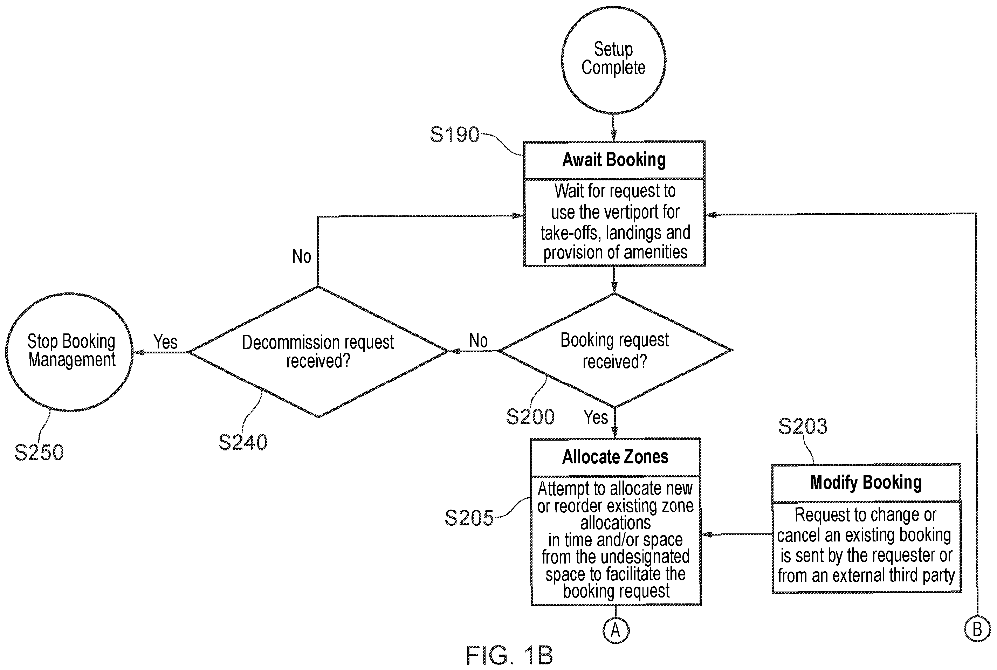

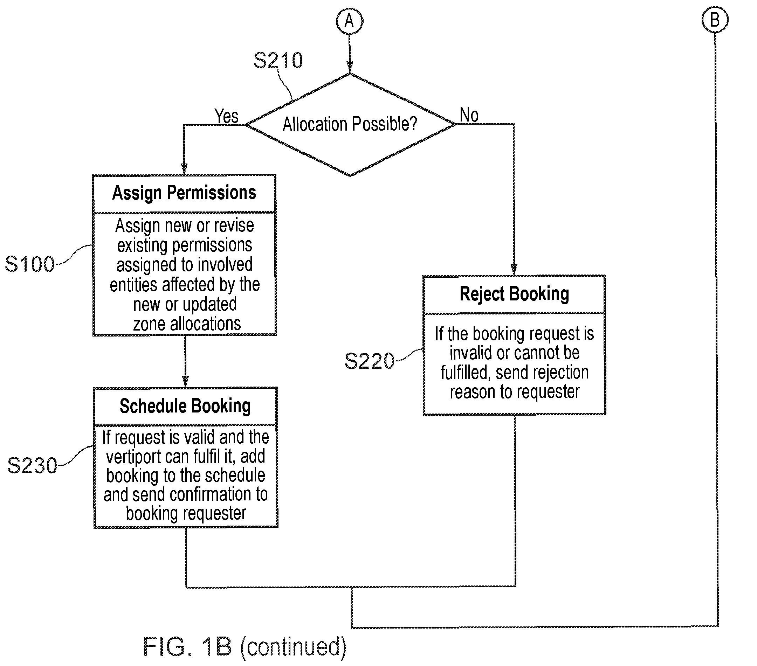

Turning now to FIG. 1B, at step S190, the controller 20 awaits booking requests. The booking requests typically identify missions to be performed and typically identify the mobile or static entities which will perform those missions. The requests are typically received from the mobile entities and/or from a mission controller (which may be automated as a computer-implemented device) such as an operator initiating the missions and/or operating the controller 20. The controller 20 receives a message relating to a booking or mission. Each booking or mission typically indicates a type of mobile entity, characteristics of that mobile entity (such as size), and a time period that the booking or mission is expected to take place.

At step S200, a determination is made as to whether a booking request has been received from mobile entities such as vehicles, operators, users and/or the mission controller. If no booking request is received, then processing proceeds to step S240 to determine whether a request to decommission the vertiport has been received or not. If a request to decommission the vertiport has been received, then processing proceeds to step S250 where no more booking requests are accepted. If no request to decommission the vertiport has been received, then processing returns to step S190 to await a booking request. If a booking request is received, then processing proceeds to step S205.

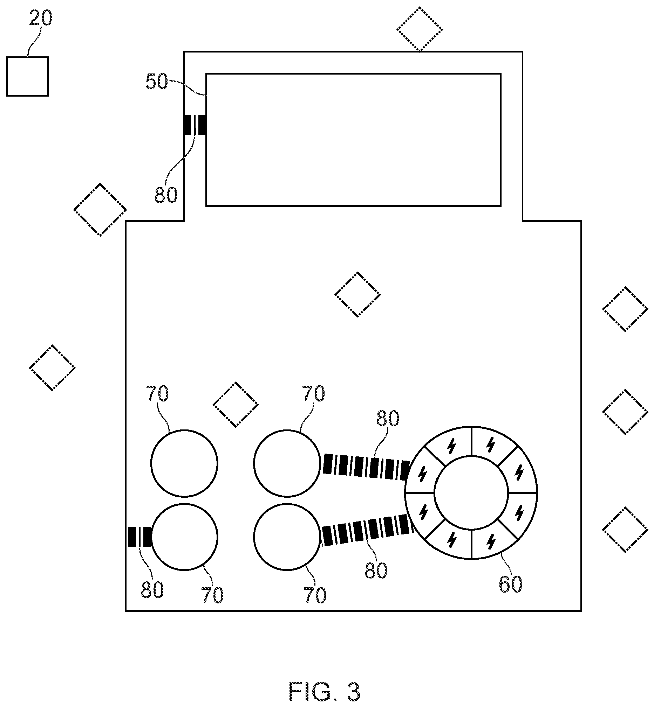

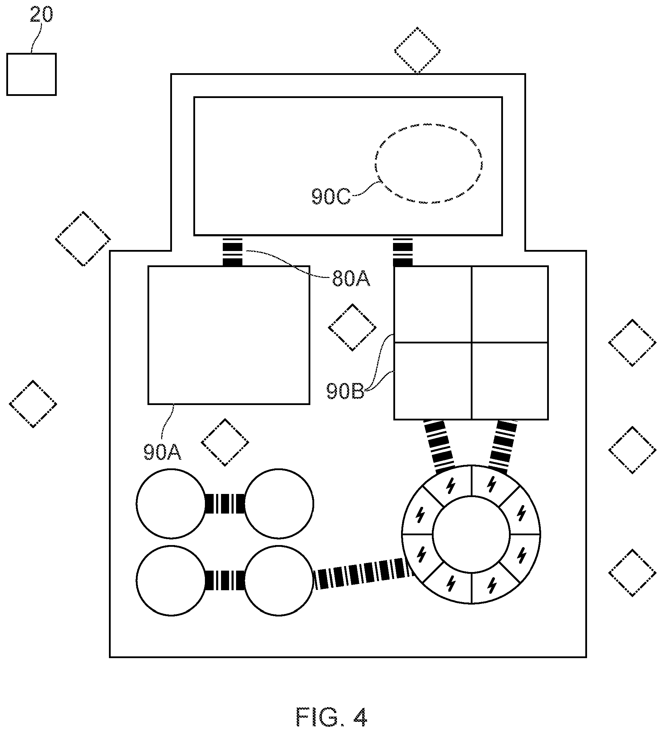

At step S205, one or more zones are attempted to be designated or allocated from the undesignated space within the managed space 40. By default, all the space (other than any omitted space as mentioned above) within the managed space 40 is undesignated until it becomes designated as a zone. These zone(s) are allocated from the undesignated space to exist for at least a time period associated with the booking request. The allocation of zone(s) may require previous zone(s) associated with previous booking requests to be moved (in space and/or time) to prevent the same space being allocated to different zones at the same time. In particular, the zone(s) required for the mission or booking are created from the undesignated space within the managed space 40 for at least the time window of the booking request (of course it will be appreciated that the zone may be removed earlier than this if no longer required). If required and possible, this includes resizing, changing shape, reallocating, changing or moving existing zones already created spatially and/or temporally to allow sufficient space for the newly created zone(s) to ensure that there is no spatial and temporal overlap between zones within the managed space 40 and/or that sufficient safety margin in space and time is provided between zones. For example, (see FIGS. 3 and 4) the controller 20 determines that it needs to allocate the zones and configures a take-off/landing zone (TOLZ) 90A as well as a number of other TOLZ 90B. A TOLZ is a zone which is used for the take-off and landing of airborne or air-based entities. The height of the TOLZ can vary based on the needs of the airborne or air-based entity. In this example, the UAV associated with TOLZ 90A is considerably larger than the UAVs associated with TOLZ 90B. Accordingly, the TOLZ 90A is significantly larger than each of the TOLZ 90B. Although in this example the TOLZ are generally rectangular in shape, it will be appreciated that this need not be the case and they may take any shape that suits the vehicle such as circular or elliptical. Transit zones 80; 80A may be established, created or allocated or re-routed or updated in view of the establishment or allocation of the TOLZ 90A, 90B. The missions for the UAVs may include flight operations including landing, taking off, pitstops, hovering, load-related actions in the air or other non-flying operations such as charging, parking, load-related actions on the ground.

Similarly, as illustrated in FIG. 3, the controller 20 receives one or more requests and establishes or allocates a staging zone 50 which typically extends to a height of around 4m (the expected maximum height of entities within that zone, although other heights are possible), a set of charging zones 60 which typically extend to around 2m (the expected maximum height of entities within that zone, although other heights are possible) as well as a set of emergency take-off/landing zones 70 which typically extend to the height of the managed space 40 (although other heights are possible). In addition, a set of transit zones 80 are established or allocated between these zones, if required by a mission, which also typically extend to a height of around 3m (the expected maximum height of entities within that zone, although other heights are possible) - it will be appreciated that not all the transit zones 80; 80a shown in FIGS 3 & 4 need be established or allocated if they are not required by a mission. The staging zone 50 is typically used for transferring goods or passengers on and off mobile entities or to provide services, for maintenance activities and/or for storing goods or equipment. The charging zones 60 are typically used for charging mobile entities and the emergency take-off/landing zones 70 are typically used to operate mobile entities for emergency situations. The transit zones 80 provide linking corridors between these zones typically when the mission includes transfer of entities from one zone to another.

At step S203, any changes, modifications or cancellations to bookings are received at the controller 20 from the requester or from an external third party, such as a governmental body, and processing proceeds to step S205 to attempt to allocate zones to accommodate those changes and/or to remove zones following cancellations.

Processing then proceeds to step S210.

At step S210, a determination is made as to whether it is possible to allocate the zone(s) required for the booking request. In particular, the controller 20 determines from the booking request the type of zone(s) required, its dimensions, the start time and the period of time the zone is required for the mission. The controller 20 also determines whether there is adequate undesignated space available within the managed space 40 to dynamically create the required zone(s) at the required time and/or at a modified time for the required and/or modified duration. Optionally, this includes adding any safety space and buffer time.

If it is determined that it is not possible to allocate the required zone(s), then processing proceeds to step S220 where the booking is rejected. It may not be possible to create the required zone(s) because, for example, there is insufficient undesignated space available for the time period of the mission and it is not possible to change the timing of the mission. The requester may be informed that the booking is rejected either explicitly or implicitly through the failure to provide a booking request acknowledgement. Processing then returns to step S190. If it is determined that it is possible to allocate the required zone(s), then processing proceeds to step S100.

At step S100, mobile or static entities are granted permissions to be present in the allocated zone(s) in order to perform their missions or part of the mission involving those entities. As will be explained in more detail below, typically each zone is associated with a permissions table or schedule which indicates which mobile entities, or static or immobile entities (such as packages, infrastructure, etc.), are permitted to be present in that zone. Typically, those permissions are allocated for a time period related to the expected start time, duration and/or end time of a mission or part of the mission involving those entities. Zone permissions can be granted for static and mobile entities such as unmanned air vehicles (UAVs), unmanned ground vehicles (UGVs), personnel, customers, other vehicles, cargo and any object that can be present in the zone(s). Typically, permission(s) will also be granted for the remainder of undesignated space of the managed zone 40 which is not being used by operational, established or allocated zone.

Processing proceeds to step S230 where the booking is confirmed, a confirmation message is sent to the requester and the booking is scheduled.

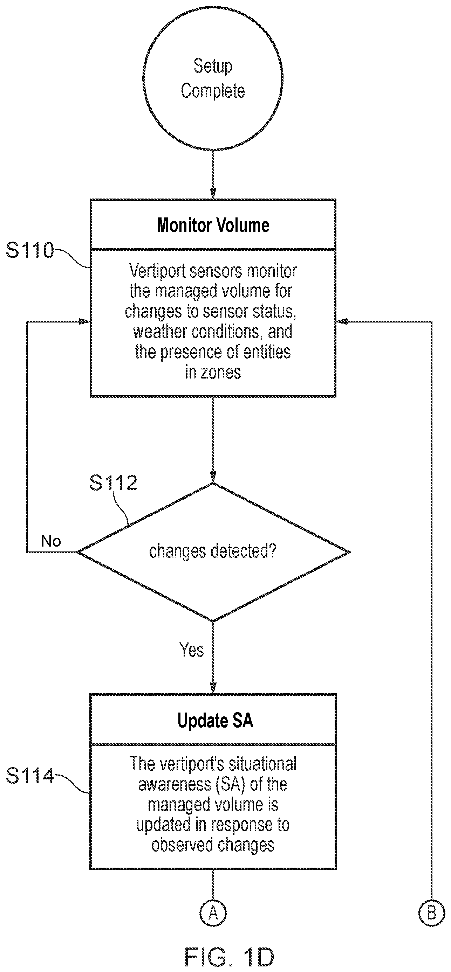

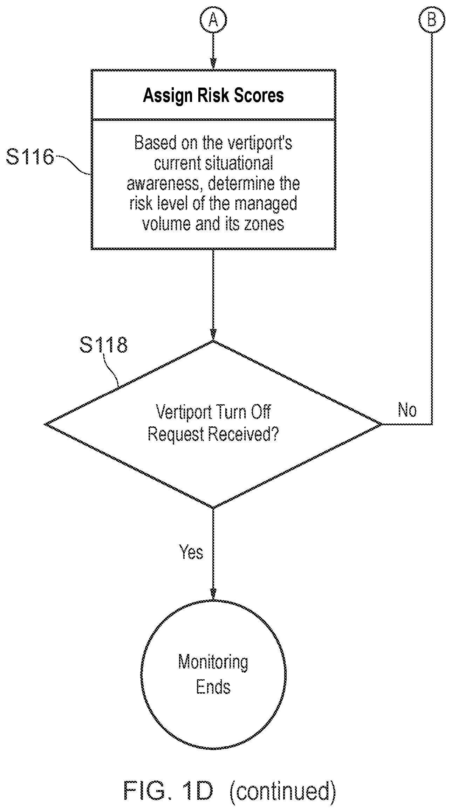

Meanwhile, at step S110 (see FIG 1D), the controller 20 receives information from the sensors 10, from entities approaching or within the managed space 40, as well as environmental conditions (such as weather information) and air traffic data.

At step S112, the controller 20 determines whether any changes in the situation have occurred, including its own status. If no changes have occurred, then processing returns to step S110. If changes have occurred, then processing proceeds to step S114.

At step S114, the situational awareness (typically provided by a situation model) is updated. In particular, the controller 20 uses the information received at step S110 and uses this to monitor the managed space 40 by combining this into the vertiport's situational awareness representing the situation within the managed space 40. Such situational awareness typically identifies the location and types of involved mobile and static entities as well as entities not involved within the managed space 40, together with any uncertainties associated with those locations due to, for example, external conditions affecting the operation of entities and processing proceeds to step S116.

At step S116, the risk weight scores for the different zones are computed or assigned/updated based on the updated situational awareness and processing proceeds to step S118. For example, a zone with no entities present may be allocated a lowest risk weight score. A zone with an entity present which is permitted to be present within that zone may be allocated an intermediate risk weight score. A zone with an entity present which is not permitted to be present within that zone may be allocated a higher risk weight score. The risk weight scores may also take into account the type of entity present, the type of zone, as well as operating conditions such as, for example, sensor status, environmental conditions, GNSS status, etc.).

At step S118, it is determined whether a request has been received to turn off the vertiport. If the vertiport is not to be turned off, then processing returns to step S110. If the vertiport is to be turned off, then monitoring ends.

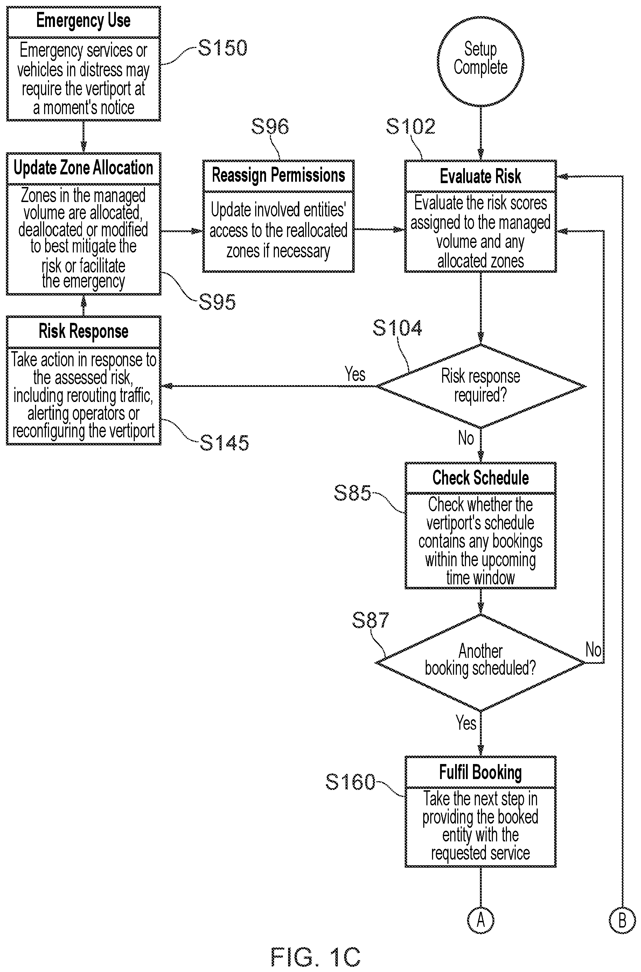

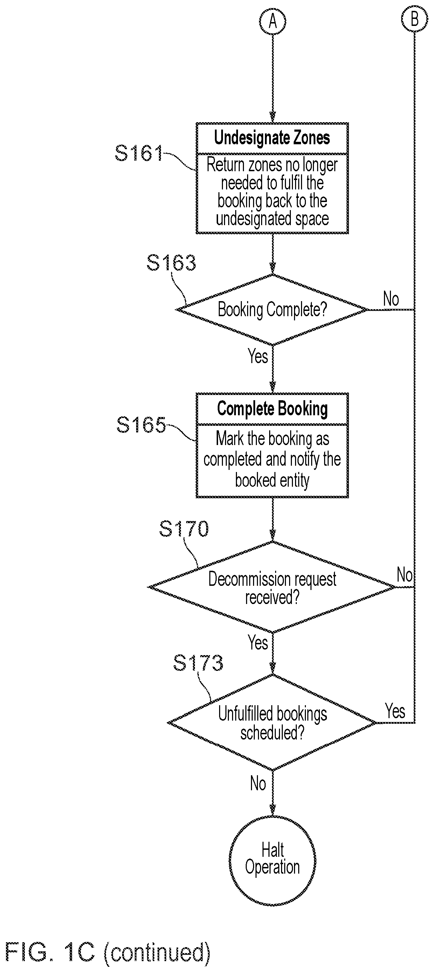

Meanwhile, at step S102, (see FIG. 1C) the risk weight scores are evaluated and processing proceeds to step S104.

At step S104, should a risk weight score indicate that a risk response is required, then processing proceeds to step S145, otherwise processing proceeds to step S85.

At step S145, a risk response is made depending on the value of the risk weight score and the type of zone. In some embodiments, one or more risk weight score thresholds may be set for each zone to simplify processing. These thresholds may differ for different zones and/or for different operating conditions. In other embodiments, the absolute values of risk weight scores may be evaluated.

The risk weight score for each zone is evaluated. For example, should a first threshold for a zone be exceeded, then the mission associated with that zone may be halted, paused, the entity or entities involved in that mission may be put in a safe state and/or zone(s) modified or reconfigured in time and/or space. Should a second threshold be exceeded, then the mission associated with that zone may be terminated, rerouted to a newly allocated zone or different vertiport and/or zone(s) modified or reconfigured in time and/or space. The controller 20 may provide an indication that a threshold has been exceeded to an operator. Processing then proceeds to step S95.

Meanwhile, at step S150, should an emergency occur, then an emergency mission or booking may be received or generated by the controller 20. Processing then proceeds to step S95.

At step S95, the controller 20 allocates or creates an emergency take-off/landing zone 70 (together with any associated zone(s) as required), if an emergency occurred. In another example, the controller 20 may modify or reconfigure in time and/or space zones to provide a response to an increase in risk. At step S96, the controller 20 assigns or reassigns permission for the involved entity or entities to use those zone(s). Optionally, the permissions of other zones may be updated to improve safety in view of the emergency mission or due to a risk response. Processing then returns to step S102.

At step S85, the controller 20 determines whether there are any upcoming bookings within a specified timeframe and processing proceeds to step S87.

At step S87, if there are no upcoming bookings, then processing returns to step S102. If there are upcoming bookings, then processing proceeds to step S160.

At step S160, the controller 20 fulfils missions or bookings by making the allocated zones operational at the allocated time(s).

At step S161, the controller 20 returns the space of zone(s) no longer required to fulfil bookings to the undesignated space of the managed space 40.

At step S163, a determination is made as to whether the mission has completed. If the booking has not completed, then processing returns to step S102. If the booking has completed, then processing proceeds to step S165.

At step S165, the booking or mission is marked as complete and the involved entity or entities are signalled to inform the mission is complete. Processing then proceeds to step S170.

At step S170, the controller 20 determines whether a decommission request has been received. If no request has been received, then processing returns to step S102, otherwise processing proceeds to step S173.

At step S173, the controller 20 determines whether there are outstanding bookings scheduled. If there are outstanding bookings scheduled, then processing returns to step S102, otherwise the controller 20 halts scheduling operation to enable the vertiport to be decommissioned because no further missions or bookings are planned or expected.

Hence, it can be seen that the controller 20 can then make real time automated and centralized decisions relating to the configuration and the operation of the managed space 40. In particular, planning can be performed in relation to the number, type, location and configuration of the different zones, as well as planning movements into, out of and within the managed space 40, as well as considering the current safety, security and operational status of each of those zones, the status of the sensors and controller, the status of the entities and whether any currently planned missions need to be adjusted or halted. Although not necessary, in some embodiments, the current status and other related information can be communicated to the different entities.

Ground-based mobile entities may have missions including maintenance or the loading or unloading of UAVs. Human mobile entities can include customers, maintenance personnel, delivery personnel, personnel bringing or retrieving UAVs, personnel performing other operations linked to UAVs, as well as personnel operating support vehicles or unmanned ground vehicles (UGVs). The controller 20 receives information from the sensors 10 as well as information from sensors on board the entities such as UAVs, UGVs, humans carrying or cargo equipped with sensor devices such as mobile phones, tags and the like or from external providers. That information can indicate the position and/or status of the entities. In addition, the controller 20 may receive information relating to environmental conditions such as weather and visibility as well as the status of the sensors 10.

The sensors 10 monitor the managed space 40 and provide this information to the controller 20. The controller 20 also typically receives information from involved entities. The controller 20 updates the vertiport's situational awareness to align with the information being provided.

If there is a change in local operating conditions (for example, a change in weather or visibility or other operating condition), then the zones can be changed or modified in time and/or space to accommodate that change. For example, a change may be due to the status of sensor 10, including whether there is any uncertainty related to the information being provided, whether there is a deterioration or loss of communications, and whether there are environmental conditions such as adverse weather or poor visibility. In addition to this, a change may be due to a change in communications with involved entities and/or a change to GNSS or other positioning or localisation status and any other factors affecting ground and air operations. Furthermore, a change may be due to a failure or loss of functionality of a sensor and/or of the controller.

The safety security and operational status is determined, which includes making centralized and automated assessments using the digital situational awareness and checking for objects present in zones and their permissions. The computation of each zone's risk weight score is performed. In particular, the location of each entity within the managed space is determined and the permissions are checked. Should an object be detected within the managed space which does not have permission to be at that location then a risk response can be implemented. An appropriate action is instructed to the offending object and/or to other entities and/or reconfiguring of zone(s). For example, the offending object can be instructed to halt, elevate, leave the managed space, take evasive action or the like. Other mobile entities which risk proximity to the offending object can be instructed likewise. Centralized operation updates are performed if needed, including the computation of alternative missions, the automated selection of best mitigation strategies such as diverting entities, holding entities, holding ground operations, performing maintenance of a sensor 10 and/or performing updates to the location, size and/or timing of zone(s).

### Example Operation 1

The following describes a mission for a mobile entity (in this example, an autonomous bus) to pick up passengers from the staging zone 50. In this example, the request indicates the time that the pick-up is to occur as being between 10.30 and 10.35, however, in other examples the request may not include a time and instead the controller 20 may determine a time that the pick-up can occur. At step S200, the request is received by the controller 20. The message indicates that the mobile entity is a bus and so the controller 20 is able to derive that a staging zone and transit zone will be required and the size and height of the zones either from the request or from pre-stored information. If staging zone 50 is not allocated, then, at steps S205 and S210, it is allocated for at least the period. Likewise, if transit zone 80A is not allocated, then it is allocated to enable passengers to approach the bus in staging zone 50. Staging zone 50 is allocated in the managed space 40 for the bus to enter for the period 10.29 to 10.36 and staging zone 50 is added to the bus's permissions. Transit zone 80A is allocated in the managed space 40 for passengers to approach the bus between 10.31 and 10.34 and transit zone 80A is added to the passengers' permissions. Staging zone 50 is also added to the passengers' permissions for between 10.31 and 10.34.

Hence, staging zone 50 and transit zone 80A are allocated in response to the mission request. Some zones are allocated with a buffer period at the beginning and/or end of the required periods to allow approach and exit. The entities are allocated zone permissions at step S100 which exist for the allocated time periods.

| **Zones** | **Allocations** |
|---|---|
| Managed space 40 | None |
| Staging zone 50 | 10:29-10:36 |
| Transit zone 80A | 10:31-10:34 |

| **Mobile Entities** | **Planned Permissions** | |
|---|---|---|
| Bus | staging zone 50 | 10:29-10:36 |
| Passengers | staging zone 50 | 10:31-10:34 |
| | transit zone 80A | 10:31-10:34 |

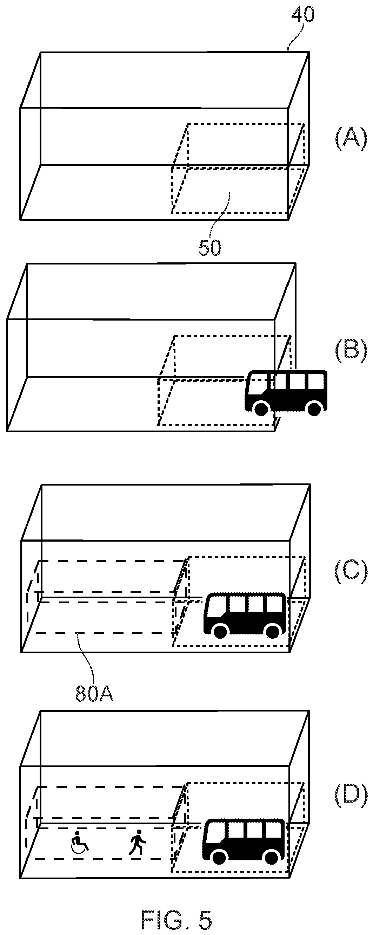

Accordingly, at 10.29, the staging zone 50 is operational, as shown in FIG. 5A. Risk weight scores for each zone are allocated at step S116 - in this example -10 is a default low-risk weight score (it will be appreciated that other risk weight score scales can be used) which is allocated to both the managed space 40 and to staging zone 50. The bus is granted a permission associated with staging zone 50 between 10.29 and 10.36.

| **Zones currently in operation** | **Risk Weight Score** |
|---|---|
| Managed space 40 | -10 |
| Staging zone 50 | -10 |

| **Mobile Entities** | **Current Permissions** | |
|---|---|---|
| Bus | staging zone 50 | 10:29-10:36 |

As shown in FIG. 5B, at 10.30, the autonomous bus enters staging zone 50. The presence of the bus is detected at steps S110 and S112, where sensors 10, optionally together with any sensors on the bus, identify the location of the bus. At step S116, a revised risk weight score is calculated for both the managed space 40 and the staging zone 50; in this case, the risk weight score changes to -5 for both zones which are still judged at step S102 to be at safe levels.

| **Zones currently in operation** | **Risk Weight Score** |
|---|---|
| Managed space 40 | -5 |
| Staging zone 50 | -5 |

As shown in FIG. 5C, at 10.31, transit zone 80A is operational. The risk weight score for transit zone 80A is set to the lowest level at -10. The passengers have permission to enter the staging zone 50 and the transit zone 80A and the risk weight scores remain unchanged.

| **Zones currently in operation** | **Risk Weight Score** |
|---|---|
| Managed space 40 | -5 |
| Staging zone 50 | -5 |
| Transit zone 80A | -10 |

| **Mobile Entities** | **Current Permissions** | |
|---|---|---|
| Bus | staging zone 50 | 10:29-10:36 |
| Passengers | staging zone 50 | 10:31-10:34 |
| | transit zone 80A | 10:31-10:34 |

As shown in FIG. 5D, at 10.32, passengers enter transit zone 80A. The risk weight scores for the managed space 40 and staging zone 50 remain unchanged, but the risk weight score for transit zone 80A increases to -5 since the passengers had permission to be present in transit zone 80A.

| **Zones currently in operation** | **Risk Weight Score** |
|---|---|
| Managed space 40 | -5 |
| Staging zone 50 | -5 |
| Transit zone 80A | -5 |

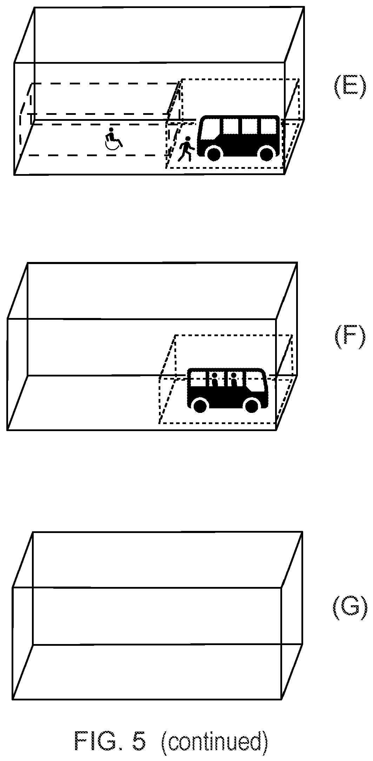

As shown in FIG. 5E, passengers enter staging zone 50 to board the bus. Since the passengers have permission to enter staging zone 50 the risk weight score for staging zone 50 remains unchanged.

As shown in FIG. 5F, the allocation of transit zone 80A is complete and transit zone 80A is removed at step S161 and returned to undesignated space. Now the bus and passengers form a single entity and so the passengers' permissions are no longer required. The risk weight scores now revert to that shown in FIG. 5B.

| **Zones currently in operation** | **Risk Weight Score** |
|---|---|
| Managed space 40 | -5 |
| Staging zone 50 | -5 |

| **Mobile Entities** | **Current Permissions** | |
|---|---|---|
| Bus | staging zone 50 | 10:29-10:36 |

As shown in FIG. 5G, the bus now leaves staging zone 50 and so staging zone 50 is removed and returned to undesignated space and the risk weight score of the managed space 40 reverts to its lowest level at -10.

| **Zones currently in operation** | **Risk Weight Score** |
|---|---|
| Managed space 40 | -10 |

| **Mobile Entities** | **Current Permissions** |
|---|---|
| - | - |

### Example Operation 2

The following describes a mission where an external factor causes an increase in a zone's risk weight score which results in the change to that zone to reduce the risk weight score.

A mission request is received for a UAV to land for package delivery at 11.00 at step S200. The message indicates that the mobile entity is a UAV and so the controller 20 is able to derive that a TOLZ will be required and the size and height of the zone either from the request which indicates the size of the UAV and/or its package or from pre-stored information. At step S205, TOLZ 90A is allocated in the managed space 40 for use by the UAV. TOLZ 90A is allocated between 10.55 and 11.05. At step S100, TOLZ 90A is added to the drone's permissions between 10.55 and 11.05.

| **Zones** | **Allocations** |
|---|---|
| Managed space 40 | None |
| TOLZ 90A | 10:55-11:05 |

| **Mobile Entities** | **Planned Permissions** | |
|---|---|---|
| UAV | TOLZ 90A | 10:55-11:05 |

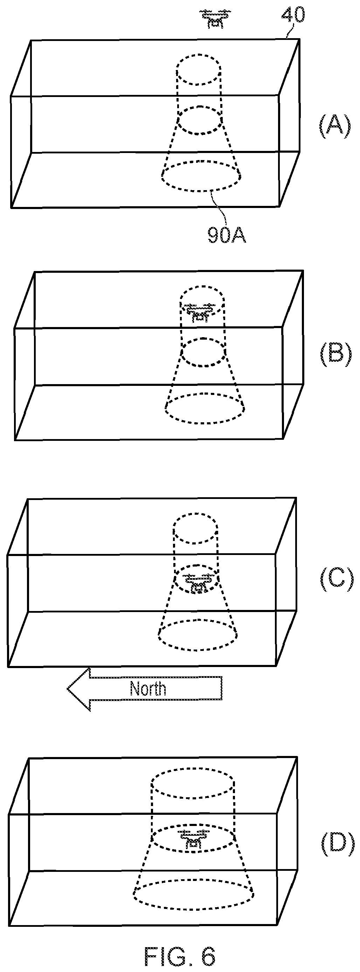

As illustrated in FIG. 6A, at 10.55 TOLZ 90A is operational. The risk weight score for the managed space 40 and for TOLZ 90A is set to the default minimum value of -10. The UAV has permission to enter TOLZ 90A between 10.55 and 11.05.

| **Zones currently in operation** | **Risk Weight Score** | |
|---|---|---|
| Managed space 40 | -10 | |
| TOLZ 90A | -10 | |

| **Mobile Entities** | **Current Permissions** | |
|---|---|---|
| UAV | TOLZ 90A | 10:55-11:05 |

As shown in FIG. 6B, at 10.56 the UAV enters TOLZ 90A and the managed space 40. The risk weight scores for the managed space 40 and TOLZ 90A increase to -5, which is still a safe level.

| **Zones currently in operation** | **Risk Weight Score** |
|---|---|
| Managed space 40 | -5 |
| TOLZ 90A | -5 |

As shown in FIG. 6C, at step S110 the controller 20 receives information from the sensors 10, the UAV or from elsewhere which indicates that the wind force is increasing in the north direction. The risk weight score for TOLZ 90A is increased as a result to above 0, which indicates an unsafe level.

| **Zones currently in operation** | **Risk Weight Score** |
|---|---|
| Managed space 40 | -5 |
| TOLZ 90A | 10 |

Accordingly, as illustrated in FIG. 6D, at step S95, the controller 20 reconfigures the shape and size of TOLZ 90A to accommodate the increased risk of the UAV being blown in the northerly direction. The risk weight score for the reconfigured TOLZ 90A is updated at step S116. The risk weight score for TOLZ 90A is then re-evaluated at step S102 to be back at a safe level.

| **Zones currently in operation** | **Risk Weight Score** |
|---|---|
| Managed space 40 | -5 |
| TOLZ 90A | -5 |

### Example Operation 3

The following describes a scenario where a mission request is received from a UAV and a mission request is received for a bus to pick up passengers as described above.

In particular, a mission request is received for a UAV to pick up a package from TOLZ 90C (which is contained within the area allocatable to staging zone 50 - see FIG. 4) between 10.20 and 10.26. Another mission request is received for the autonomous bus to pick up unidentified passengers from staging zone 50 between 10.30 and 10.35. These mission requests result in the allocation of staging zone 50 for the bus between 10.29 and 10.36 and staging zone 50 is added to the bus's permissions. This also results in the allocation of transit zone 80A in the managed space 40 for the passengers to approach the bus between 10.31 and 10.34 and adding transit zone 80A to the passengers' permissions, as well as adding staging zone 50 to the passengers' permissions between 10.31 and 10.34. It will be appreciated that this example starts after the part of the mission that includes the drop-off of the package.

| **Zones** | **Allocations** |
|---|---|
| Managed space 40 | None |
| TOLZ 90C | 10:20-10:26 |
| Staging zone 50 | 10:29-10:36 |
| Transit zone 80A | 10:31-10:34 |

| **Involved Entities** | **Planned Permissions** | |
|---|---|---|
| Package | TOLZ 90C | 10:20-10:26 |
| UAV | TOLZ 90C | 10:20-10:26 |
| Bus | staging zone 50 | 10:29-10:36 |
| Passengers | staging zone 50 | 10:31-10:34 |
| | transit zone 80A | 10:31-10:34 |

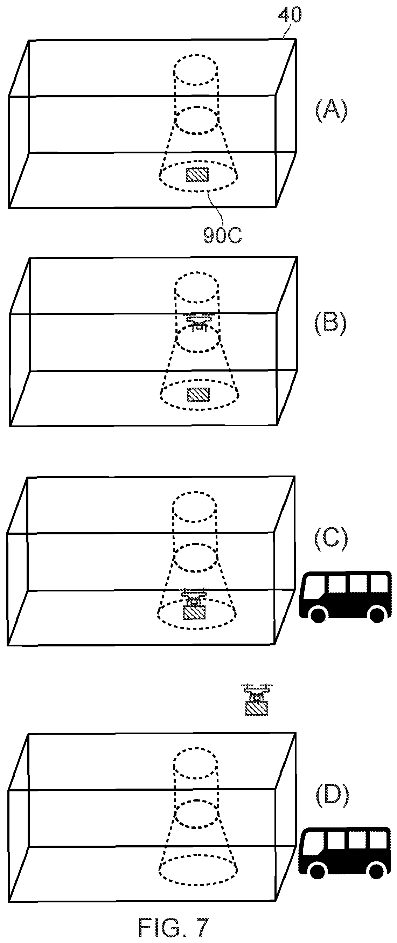

As shown in FIG. 7A, at 10.20, TOLZ 90C is operational and the risk weight scores are set at their lowest default level of -10. The drone has permission to be in TOLZ 90C between 10.20 and 10.26.

| **Zones currently in operation** | **Risk Weight Score** |
|---|---|
| Managed space 40 | -10 |
| TOLZ 90C | -10 |

| **Involved Entities** | **Current Permissions** | |
|---|---|---|
| Package | TOLZ 90C | 10:20-10:26 |
| UAV | TOLZ 90C | 10:20-10:26 |

As shown in FIG. 7B, at 10.21, the drone enters the managed space 40 and TOLZ 90C. The risk weight scores increase to -5 but are still at safe levels.

| **Zones currently in operation** | **Risk Weight Score** |
|---|---|
| Managed space 40 | -5 |
| TOLZ 90C | -5 |

As shown in FIG. 7C, at 10.22, the autonomous bus arrives early. It has no permission to enter the managed space 40 and so it waits outside of the managed space 40 but sends an updated mission request at step S203 to proceed with its mission as soon as possible. However, in this example, at step S210 the controller 20 determines that no change is possible since staging zone 50 and transit zone 80A will overlap with TOLZ 90C which is currently in use. It is not possible to delay the UAV or to change the size or location of the staging zone 50, transit zone 80A and/or TOLZ90C to avoid overlap. Hence, at step S220 the request is rejected and the automated bus halts.

As shown in FIG. 7D, at 10.23, the UAV exits with the package from TOLZ 90C and the managed space 40. The risk weight scores go back to their default lowest value.

| **Zones currently in operation** | **Risk Weight Score** |
|---|---|
| Managed space 40 | -10 |
| TOLZ 90C | -10 |

At 10.24, at step S161, it is determined that TOLZ 90C is no longer required and therefore its allocation is terminated, the zone is returned to the undesignated space, and the UAV's and package's permissions are removed. The controller receives a request to change an existing booking for the bus at step S203 and so, given that it is determined at step S210 that the staging zone 50 and the transit zone 80A can be allocated without overlapping another zone within the managed space 40, the allocation of staging zone 50 is automatically updated to 10.24 to 10.31, the bus's permissions are updated to 10.24 to 10.31 and the passengers' permissions are updated to 10.26 to 10.29. The allocation of transit zone 80A is automatically updated to 10.26 to 10.29 and the passengers' permissions are updated to 10.26 to 10.29.

| **Zones** | **Allocations** |
|---|---|
| Managed space 40 | None |

| TOLZ 90C | terminated - returned to undesignated space |
|---|---|
| Staging zone 50 | 10:24-10:31 |
| Transit zone 80A | 10:26-10:29 |

| **Involved Entities** | **Current Permissions** | |
|---|---|---|
| Package | None | |
| UAV | None | |
| Bus | staging zone 50 | 10:24-10:31 |
| Passengers | staging zone 50 | 10:26-10:29 |
| | transit zone 80A | 10:26-10:29 |

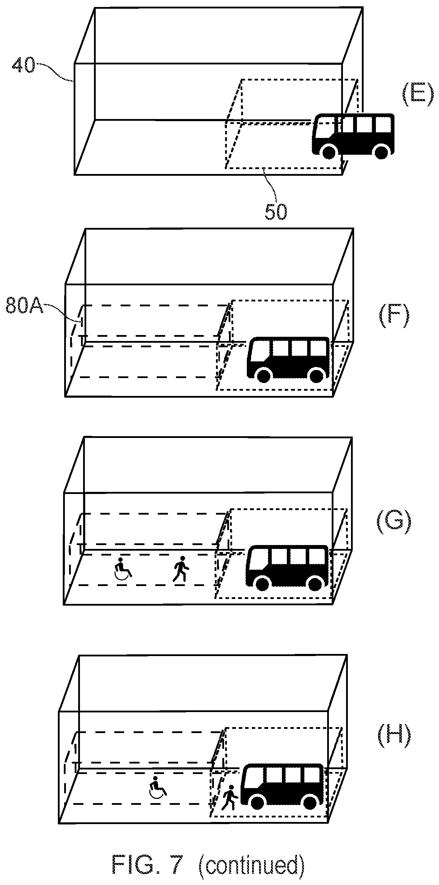

These updates are then sent to the bus. As shown in FIG. 7E, at 10.24, the bus enters staging zone 50. The presence of the bus is detected at step S110 and S112, where sensors 10, optionally together with any sensors on the bus, identify the location of the bus. At step S116, a revised risk weight score is calculated for both the managed space 40 and the staging zone 50; in this case, the risk weight score changes to -5 for both zones which are still judged to be at safe levels.

| **Zones currently in operation** | **Risk Weight Score** |
|---|---|
| Managed space 40 | -5 |
| Staging zone 50 | -5 |

As shown in FIG. 7F, at 10.26, transit zone 80A is operational. The risk weight score for transit zone 80A is set to the lowest level at -10. The passengers have permissions and the risk weight scores remain unchanged.

| **Zones currently in operation** | **Risk Weight Score** |
|---|---|
| Managed space 40 | -5 |
| Staging zone 50 | -5 |
| Transit zone 80A | -10 |

| **Involved Entities** | **Current Permissions** | |
|---|---|---|
| Bus | staging zone 50 | 10:24-10:31 |
| Passengers | staging zone 50 | 10:26-10:29 |
| | transit zone 80A | 10:26-10:29 |

As shown in FIG. 7G, at 10.26 or shortly thereafter passengers enter transit zone 80A. The risk weight scores for the managed space 40 and staging zone 50 remain unchanged, but the risk weight score for transit zone 80A increases to -5 since the passengers had permission to be present in transit zone 80A.

| **Zones currently in operations** | **Risk Weight Score** |
|---|---|
| Managed space 40 | -5 |
| Staging zone 50 | -5 |
| Transit zone 80A | -5 |

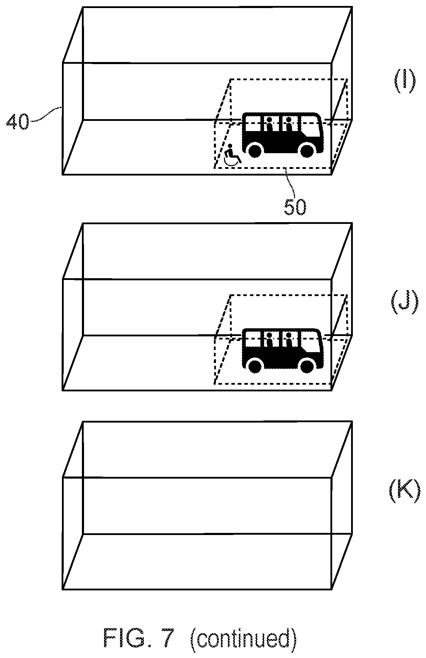

As shown in FIGS. 7H and 7I, at 10:27 passengers enter staging zone 50 to board the bus. Since the passengers have permission to enter staging zone 50 the risk weight score for staging zone 50 remains unchanged.

As shown in FIG. 7I at 10:28, it is determined at step S161 that transit zone 80A is no longer required and therefore its allocation is terminated, the zone is returned to the undesignated space, and its related permissions are removed. As shown in FIG. 7J, now the bus and passengers form a single entity and so the passengers' permissions are no longer required. The risk weight scores now revert to that indicated above.

| **Zones currently in operation** | **Risk Weight Score** |
|---|---|
| Managed space 40 | -5 |
| Staging zone 50 | -5 |

| **Involved Entities** | **Current Permissions** | |
|---|---|---|
| Bus | staging zone 50 | 10:24-10:31 |

At 10:30 the bus now leaves staging zone 50.

As shown in FIG. 7K, the bus has left staging zone 50 and so staging zone 50 is removed and this zone is returned to undesignated space and the risk weight score of the managed space 40 reverts to its lowest level at -10.

| **Zones currently in operation** | **Risk Weight Score** |
|---|---|
| Managed space 40 | -10 |

| **Involved Entities** | **Current Permissions** |
|---|---|
| | |

### Example Operation 4

The following describes a scenario where a lack of permission causes safety actions to be taken.

A mission request is received for a drone to drop off a package at 14.00. The request results in the allocation of TOLZ 90A in the managed space 40 for the drone between 13.55 and 14.05 and TOLZ 90A is added to the drone's permissions.

| **Zones** | **Allocations** |
|---|---|
| Managed space 40 | None |
| TOLZ 90A | 13:55-14:05 |

| **Mobile Entities** | **Planned Permissions** | |
|---|---|---|
| UAV | TOLZ 90A | 13:55-14:05 |

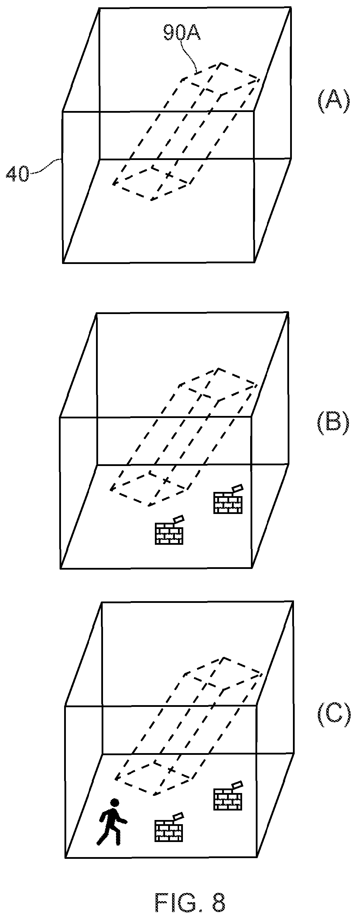

As illustrated in FIG. 8A, at 13.55, TOLZ 90A is operational. The risk weight scores are set to the default value representing the minimum risk.

| **Zones currently in operation** | **Risk Weight Score** |
|---|---|
| Managed space 40 | -10 |
| TOLZ 90A | -10 |

| **Mobile Entities** | **Current Permissions** |
|---|---|
| UAV | TOLZ 90A 13:55-14:05 |

As illustrated in FIG. 8B, at 13.55, at steps S110 and S112 debris is detected in the managed space 40. The risk weight score for the managed space 40 is increased to an unsafe level.

| **Zones currently in operation** | **Risk Weight Score** |
|---|---|
| Managed space 40 | +5 |
| TOLZ 90A | -10 |

As a result, automated action is taken at step S145. The controller 20 generates a notification to a maintenance operator to remove the debris in the managed space 40. Automated permission is given at step S103 to the maintenance operator for the managed space 40 between 13.55 and 14.00.

| **Zones currently in operation** | **Risk Weight Score** |
|---|---|
| Managed space 40 | +5 |
| TOLZ 90A | -10 |

| **Mobile Entities** | **Current Permissions** | |
|---|---|---|
| UAV | TOLZ 90A | 13:55-14:05 |
| Maintenance operator | Managed space 40 | 13:55-14:00 |

As illustrated in FIG. 8C, at 13.56, the operator enters the managed space to remove the debris. As the maintenance operator is identified, for example by wearing an loT tag which communicates with the sensors and/or the controller, the risk weight score of the managed space 40 is not increased.

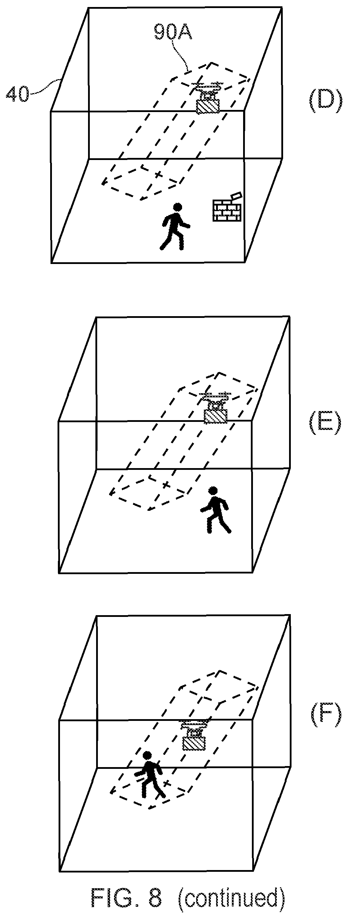

As illustrated in FIG. 8D, at 13.57, the UAV enters TOLZ 90A. The TOLZ 90A risk weight score increases but it is still at a safe level.

| **Zones currently in operation** | **Risk Weight Score** |
|---|---|
| Managed space 40 | +5 |
| TOLZ 90A | -5 |

As illustrated in FIG. 8E, all the debris has been removed and the risk weight score of the managed space 40 is decreased to a safe level.

| **Zones currently in operation** | **Risk Weight Score** |
|---|---|
| Managed space 40 | -5 |
| TOLZ 90A | -5 |

As illustrated in FIG. 8F, as the operator leaves the managed space 40, the operator erroneously enters TOLZ 90A. The controller 20 determines that the operator does not have permission to be in TOLZ 90A, and so the TOLZ 90A risk weight score is increased to an unsafe level.

| **Zones currently in operation** | **Risk Weight Score** |
|---|---|
| Managed space 40 | -5 |
| TOLZ 90A | +10 |

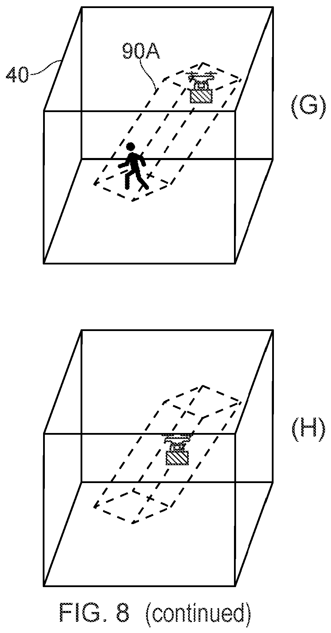

Accordingly, as illustrated in FIG. 8G, the controller 20 takes automated action and a safety command is sent to the UAV (in this example, the command instructs the UAV to elevate to the highest position of TOLZ 90A, a notification is sent to the operator and visual and/or audio signals are broadcast in the managed space 40).

As illustrated in FIG. 8H, the maintenance operator leaves TOLZ 90A and the managed space 40. The TOLZ 90A risk weight score is decreased back to a safe level. The controller 20 takes automatic action where a command is sent to the UAV to resume its mission.

| **Zones currently in operation** | **Risk Weight Score** |
|---|---|
| Managed space 40 | -5 |
| TOLZ 90A | -5 |

### Example Operation 5

The following describes a scenario where designations or allocations of zones are updated and vary during time for different take-offs, landings and stationing in between.

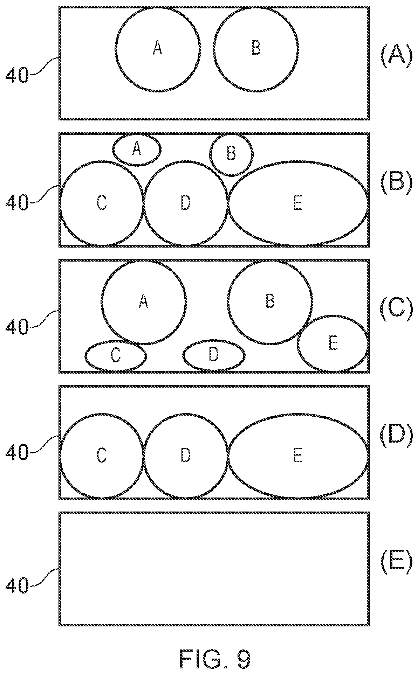

Two mission requests are received for two UAVs to land at a given time T1 then take-off at a given time T3. The request(s) results in the allocation of zone A in the managed space 40 for the first UAV from T1 to T3 and in the allocation of zone B in the managed space 40 for the second UAV from T1 to T3, as illustrated in FIG. 9A.

Three mission requests are received for three more UAVs to land at a given time T2 (between T1 and T3) then take-off at a given time T4 (after T3). As the allocations of zones A and B as it is currently (FIG 9A) would not permit three more UAVs to land when zones A & B are operational, the controller attempts to re-order existing zone allocations in time and/or space (Step S205 in FIG. 1B). This results for this example in the update of the allocations of zones A and B in space, both in size and location as needed, but not in time as the 3D update is sufficient for all the required zones to be established. This results as well in the new allocation of zone C in the managed space 40 for the third UAV and of zone D in the managed space 40 for the fourth UAV and of zone E in the managed space 40 for the fifth UAV, as described below.

This allocation update can occur before T1 as well as after T1, depending on when the mission requests are received.

As illustrated in FIG. 9A, the allocations of zone A and zone B between T1 and T2 remain as initially allocated for the first and second UAVs to land.

As illustrated in FIG. 9B, the allocations of zone A and zone B between T2 and T3, after the first and second UAVs land, are smaller in size to enable the allocations of zones C, D and E in order that the third, fourth and fifth UAVs can land.

Typically, the size (including the height) of a zone after landing is just large enough to encompass the UAV when parked, whereas before landing, the size (including the height) is larger to accommodate positioning errors and/or safety precautions/regulations during landing. Viewed in a different way, zone A and zone B are repurposed from take-off and landing zones to parking zones having a smaller size. If will be appreciated that the size (including the height) and/or location of the zones can be changed for a variety of purposes such as those set out above to fulfil different parts of a mission.

As illustrated in FIG. 9C, the allocations of zone C, zone D, and zone E between T3 and T4, after the third, fourth and fifth UAVs land, are smaller in size. Typically, the size (including the height) of a zone after landing is just large enough to encompass the UAV when parked, whereas before landing, the size (including the height) is larger to accommodate positioning errors and/or safety precautions/regulations during landing. Viewed in a different way, zone C, zone D, and zone E are repurposed from take-off and landing zones to parking zones having a smaller size.

The first and second UAVs are scheduled to take off at T3, therefore the allocations of zone A and zone B are larger in size prior to the UAVs taking-off. Typically, the size (including the height) for take-off is larger than when parked to accommodate positioning errors and/or safety precautions/regulations during take-off. Viewed in a different way, zone A and zone B are repurposed from parking zones to take-off and landing zones having a larger size.

As illustrated in FIG. 9D, the allocations of zones A and B are finished after T3, meaning after the take-off of the first and second UAVs. As the missions are complete and the allocations finished, zone A and zone B are returned to the undesignated space.

The third, fourth and fifth UAVs are scheduled to take off at T4, therefore the allocation of zone C, zone D and zone E are larger in size prior to the UAVs taking-off. Typically, the size (including the height) for take-off is larger than when parked to accommodate positioning errors and/or safety precautions/regulations during take-off. Viewed in a different way, zone C, zone D and zone E are repurposed from parking zones to take-off and landing zones having a larger size.

As illustrated in FIG. 9E, the allocations of zones C, D and E are finished after T4, meaning after the take-off of the third, fourth and fifth UAVs. As the missions are complete and the allocations are finished, zone C, zone D and zone E are returned to the undesignated space.

In addition, as before, permissions and risk weight scores may be determined and related actions taken throughout as set out above.

It will be appreciated that features of the different missions set out above may be combined suitably in different combinations to that set out above.

In some embodiments, the location and extent of one or more of the zones is projected onto the ground to be visible. Such projection may be performed by projection device(s) located on the sensors 10 or elsewhere. Those projections are typically updated as the size, position and/or existence of the zones are updated.

Although illustrative embodiments of the invention have been disclosed in detail herein, with reference to the accompanying drawings, it is understood that the invention is not limited to the precise embodiment and that various changes and modifications can be affected therein by one skilled in the art without departing from the scope of the invention as defined by the appended claims.

## Claims

1. An apparatus for operating a managed space (40) for use by at least one mobile entity, comprising:
a controller (20) configured, in response to a request message received from a requester to utilise said managed space by said mobile entity for a time period to perform a mission, to identify undesignated space within said managed space and to dynamically create at least one zone (50-90) from within said undesignated space for at least said time period of said request for use by said mobile entity during said mission.

2. The apparatus of claim 1, wherein said undesignated space comprises at least one of:
space within said managed space which has yet to be designated for use by any entity for at least said time period; and
space within said managed space which is not designated for use by said entity outside of at least said time period.

3. The apparatus of claim 1 or 2, wherein said controller is configured to at least one of:
create said zone for at least said time period;
create said zone from a start time and extend for at least said time period;
create said zone for a buffer time period extending at least one of prior to and after said time period;
position said zone at a location which fails to overlap with other zones concurrently;
remove said zone and to return space associated with said zone to said undesignated space following expiry of said time period; and
remove said zone and to return space associated with said zone to said undesignated space following receiving a confirmation message that at least a portion of said mission which requires that zone is complete.

4. The apparatus of any preceding claim, wherein said entity comprises one of a mobile and a static entity, preferably wherein said mobile entity comprises at least one of an air-based entity and a ground-based entity, preferably said air-based entity comprises at least one of an autonomous air vehicle and a piloted air vehicle, preferably said ground-based entity comprises one of an operative; a moveable ground item; an autonomous ground vehicle; and a driven ground vehicle.

5. The apparatus of claim 4, wherein when said mobile entity is an air-based entity, said zone comprises a take-off/landing zone, and preferably wherein said request message comprises an indication of a type of said air-based entity and said take-off/landing zone is dimensioned based on said type of said air-based entity.

6. The apparatus of claim 5, wherein said controller is configured to dimension said take-off/landing zone to occupy at least one of:
a defined shape of ground space which extends to at least a footprint of said air-based entity; and
a defined shape of ground space which extends to at least a footprint of a package to be delivered by said air-based entity.

7. The apparatus of any preceding claim, wherein said controller is configured, in response to operating condition information provided by at least one sensor, to vary at least one dimension of said zone, and preferably wherein said operating condition information comprises at least one of: weather conditions; mobile entity status; and managed space conditions, and preferably wherein said controller is at least one of:
configured to modify at least one dimension of said zone when at least one of: said weather conditions indicate a change in prevailing weather; said mobile entity status indicates a change in positioning accuracy; and said managed space conditions indicate a change in density of entities; and
configured to increase said size by enlarging said zone at least in a wind direction.

8. The apparatus of claim 4, wherein when said mobile entity is a ground-based entity, said zone comprises a utility zone, and preferably wherein when said mission type comprises one of staging, maintenance and charging, said zone comprises a corresponding one of a staging zone dimensioned to accommodate storage, a maintenance zone dimensioned to accommodate maintenance and a charging zone dimensioned to accommodate charging, each dimensioned to occupy a defined amount of ground space and an associated column of airspace extending from said ground space.

9. The apparatus of any preceding claim, wherein said controller is configured to at least one of:
create a plurality of said zones in response to said request message;
in response to receiving a plurality of said request messages, to create a plurality of said zones;
locate each zone to prevent simultaneously occupying overlapping space;
position each zone at a location which fails to overlap with other zones; and
reposition at least one zone when a change in a dimension of a zone results in an overlap between zones.

10. The apparatus of claim 8 when dependent on claim 5, wherein said controller is configured to at least one of:
create at least one transit zone, each dimensioned to occupy a defined amount of ground space connecting with at least one zone and an associated column of airspace extending from said ground space, and preferably wherein said column of airspace extending from said staging, maintenance, charging and transit zones has a lower altitude that said column of airspace extending from said take-off/landing zone; and
create at least one emergency zone within said managed space in an absence of any request for use by said requester, and preferably said controller is configured to locate said at least one emergency zone furthest away from any mobile entities within said managed space.

11. The apparatus of any preceding claim, wherein said controller is configured to at least one of:
allocate at least one permission to said managed space; and
allocate at least one permission to each zone, and preferably wherein said at least one permission identifies at least one entity permitted to be present in at least one of said managed space and each zone.

12. The apparatus of any preceding claim, wherein said controller is configured to at least one of:
monitor said managed space by receiving signals from entities in a vicinity of said managed space to detect presence of any entities;
determine an identity of any detected entities;
determine a location of any detected entities;
determine a size of any detected entities; and
determine said location by identifying at least one of said managed space and said at least one zone within which that entity is located.

13. The apparatus of any preceding claim, wherein said controller is configured to at least one of:
calculate a risk weight score for at least one of each zone based on said permission for that zone and said identity of any entity in that zone;
modify a risk-weight score for at least one of each zone based on operating conditions;
calculate a risk weight score for a zone to be lower when no entity is present in that zone compared to when an entity is present in that zone;
calculate a risk weight score for a zone to be higher when an unidentified entity is present in that zone compared to when no unidentified entity is present in that zone and no permission has been allocated for unidentified entities to be present in that zone;
calculate a risk weight score for a zone to be an intermediate amount when an identified entity is present in that zone and permission has been allocated for that identified entity to be present in that zone; and
calculate a risk weight score for a zone to be a higher than an intermediate amount when identified entities are present in that zone and no permission has been allocated for entities to be present at the same time in that zone.

14. The apparatus of claim 13, wherein said controller is configured with at least one of:
when said risk weight score fails to exceed an unsafe threshold amount, to determine that said mission associated with that zone is permitted to continue as planned;
when said risk weight score exceeds an unsafe threshold amount, to determine that said mission associated with that zone is prevented from continuing as planned; and
when said risk-weight score exceeds an unsafe threshold amount, to reconfigure one or more zones to reduce said risk-weight score, and preferably wherein said controller is configured to prevent said mission associated with that zone from continuing as planned by signalling one of halt and divert, and preferably wherein said divert comprises one of diverting to another zone, diverting to another managed space and diverting away from said managed space.

15. A computer-implemented method of operating a managed space (40) for use by at least one mobile entity, comprising:
in response to a request message received from a requester to utilise said managed space by said mobile entity for a time period to perform a mission, identifying undesignated space within said managed space and dynamically creating at least one zone (50-90) from within said undesignated space for at least said time period of said request for use during said mission.

16. A computer program operable, when executed on a computer to perform the method of claim 15.

## Patentansprüche

1. Einrichtung zum Betrieb eines verwalteten Raums (40) zur Nutzung durch mindestens eine mobile Entität, umfassend:
eine Steuereinheit (20), die so konfiguriert ist, dass sie als Reaktion auf Empfangen einer Anfragenachricht von einem Anfragenden, den verwalteten Raum für einen bestimmten Zeitraum durch die mobile Entität zur Durchführung einer Mission zu nutzen, innerhalb des verwalteten Raums nicht zugewiesenen Raum identifiziert und dynamisch mindestens eine Zone (50-90) innerhalb dieses nicht zugewiesenen Raums für mindestens den Zeitraum der Anfrage zur Nutzung durch die mobile Entität während der Mission erstellt.

2. Einrichtung nach Anspruch 1, wobei der nicht zugewiesene Raum mindestens eines der folgenden umfasst:
einen Raum innerhalb des verwalteten Raums, der noch keiner Entität für mindestens diesen Zeitraum zur Nutzung zugewiesen wurde; und
einen Raum innerhalb des verwalteten Raums, der nicht zur Nutzung durch die Entität außerhalb des mindestens einen Zeitraums zugewiesen ist.

3. Einrichtung nach Anspruch 1 oder 2, wobei die Steuereinheit konfiguriert ist, mindestens eine der folgenden Aktionen auszuführen:
Erstellen der Zone für mindestens den Zeitraum;
Erstellen der Zone ab einem Startzeitpunkt und Verlängern der selben mindestens für den Zeitraum;
Erstellen der Zone für einen Pufferzeitraum, der sich mindestens auf einen der Zeiträume vor und nach dem Zeitraum erstreckt;
Positionieren der Zone an einem Ort, der sich nicht gleichzeitig mit anderen Zonen überschneidet;
Entfernen der Zone und erneutes Zuweisen eines dieser Zone zugeordneten Raums nach Ablauf des Zeitraums zu dem nicht zugewiesenen Raum; und
Entfernen der Zone und erneutes Zuweisen eines dieser Zone zugeordneten Raums zu dem nicht zugewiesenen Raum, nachdem eine Bestätigungsnachricht empfangen ist, dass mindestens ein Teil der Mission, der diese Zone erfordert, abgeschlossen ist.

4. Einrichtung nach einem vorstehenden Ansprüche, wobei die Entität eine von einer mobilen und statischen Entität umfasst, wobei die mobile Entität vorzugsweise mindestens eine von einer luftgestützten und einer bodengestützten Entität umfasst, die luftgestützte Entität vorzugsweise mindestens eines von einem autonomen Luftfahrzeug und einem bemannten Luftfahrzeug umfasst, die bodengestützte Entität vorzugsweise einen von einem Bediener; einem beweglichen Bodenobjekt; einem autonomen Bodenfahrzeug; und einem angetriebenen Bodenfahrzeug umfasst.

5. Einrichtung nach Anspruch 4, wobei, wenn es sich bei der mobilen Entität um eine luftgestützte Entität handelt, die Zone eine Start/Landung-Zone umfasst, wobei die Anfragenachricht vorzugsweise eine Angabe über die Art der luftgestützten Entität umfasst und die Start/Landung-Zone auf der Grundlage des Typs der luftgestützten Entität dimensioniert wird.

6. Einrichtung nach Anspruch 5, wobei die Steuereinheit so konfiguriert ist, dass sie die Start/Landung-Zone so dimensioniert, dass sie mindestens eine der folgenden einnimmt:
eine definierte Form der Bodenfläche, die sich mindestens auf die Grundfläche der luftgestützten Entität erstreckt; und
eine definierte Form der Bodenfläche, die sich mindestens auf die Grundfläche eines von der luftgestützten Entität zuzustellenden Pakets erstreckt.

7. Einrichtung nach einem vorstehenden Ansprüche, wobei die Steuereinheit so konfiguriert ist, dass sie als Reaktion auf von mindestens einem Sensor bereitgestellte Betriebszustandsinformationen mindestens eine Dimension der Zone verändert, und wobei die Betriebszustandsinformationen vorzugsweise mindestens eine der folgenden Angaben umfassen: Wetterbedingungen; Status mobiler Entitäten; und Bedingungen des verwalteten Raums, und wobei die Steuereinheit vorzugsweise mindestens eine der folgenden ist:
konfiguriert, um mindestens eine Dimension der Zone zu ändern, wenn mindestens eine der folgenden Bedingungen zutrifft: die Wetterbedingungen deuten auf eine Änderung des vorherrschenden Wetters hin; der Status der mobilen Entität deutet auf eine Änderung der Positionsgenauigkeit hin; und die Bedingungen des verwalteten Raums deuten auf eine Änderung der Dichte der Entitäten hin; und
konfiguriert, um die Größe durch Vergrößerung der Zone zumindest in Windrichtung zu erhöhen.

8. Einrichtung nach Anspruch 4, wobei, wenn es sich bei der mobilen Entität um eine bodengestützte Entität handelt, die Zone eine Versorgungszone umfasst, und vorzugsweise, wobei, wenn der Missionstyp eines von Bereitstellung, Wartung und Laden umfasst, die Zone entsprechend eine von einer Bereitstellungszone mit Abmessungen zur Aufnahme von Lagerraum, einer Wartungszone mit Abmessungen zur Aufnahme von Wartungsraum und einer Ladezone mit Abmessungen zur Aufnahme von Laderaum umfasst, die jeweils so dimensioniert sind, dass sie eine definierte Menge an Bodenfläche und eine zugeordnete Luftraumsäule, die sich von dieser Bodenfläche erstreckt, einnehmen.

9. Einrichtung nach einem vorstehenden Ansprüche, wobei die Steuereinheit konfiguriert ist, mindestens eine der folgenden Aktionen auszuführen:
Erstellen, als Reaktion auf die Anfragenachricht, einer Vielzahl der Zonen;
als Reaktion auf den Empfang einer Vielzahl der Anfragenachrichten, Erstellen einer Mehrzahl der Zonen;
Lokalisieren jeder Zone, damit sie überlappende Räume nicht gleichzeitig belegen;
Positionieren jeder Zone an einem Ort, der sich nicht mit anderen Zonen überschneidet; und
Neupositionieren mindestens einer Zone, wenn eine Änderung der Dimension einer Zone zu einer Überlappung zwischen den Zonen führt.

10. Einrichtung nach Anspruch 8, wenn abhängig von Anspruch 5, wobei die Steuereinheit konfiguriert ist, mindestens eine der folgenden Aktionen auszuführen:
Erstellen mindestens einer Transitzone, die jeweils so dimensioniert ist, dass sie eine definierte Bodenfläche einnimmt, die mit mindestens einer Zone sowie einer zugehörigen Luftraumsäule verbunden ist, wobei die Luftraumsäule, die sich von den Bereitstellungs-, Wartungs-, Lade- und Transitzonen erstreckt, vorzugsweise eine geringere Höhe aufweist als die Luftraumsäule, die sich von der Start/Landung-Zone erstreckt; und
Erstellen mindestens einer Notfallzone innerhalb des verwalteten Raums, wenn keine Nutzungsanfrage vom Anfragenden vorliegt und vorzugsweise wobei die Steuereinheit so konfiguriert ist, dass sie diese Notfallzone möglichst weit entfernt von allen mobilen Entitäten innerhalb des verwalteten Raums lokalisiert.

11. Einrichtung nach einem vorstehenden Ansprüche, wobei die Steuereinheit konfiguriert ist, mindestens eine der folgenden Aktionen auszuführen:
Zuweisen zu dem verwalteten Raum mindestens einer Berechtigung; und
Zuweisen zu jeder Zone mindestens einer Berechtigung, und wobei die mindestens eine Berechtigung vorzugsweise mindestens eine Entität identifiziert, die berechtigt ist, sich in mindestens einem von dem verwalteten Raum und jeder Zone aufzuhalten.

12. Einrichtung nach einem vorstehenden Ansprüche, wobei die Steuereinheit konfiguriert ist, mindestens eine der folgenden Aktionen auszuführen:
Überwachen des verwalteten Raums, indem Signale von Entitäten in der Nähe des verwalteten Raums empfangen werden, um die Anwesenheit von Entitäten zu erkennen;
Bestimmen einer Identität aller erkannten Entitäten;
Bestimmen eines Standorts aller erkannten Entitäten;
Bestimmen einer Größe aller erkannten Entitäten; und
Bestimmen des Standorts, indem mindestens eines von dem verwalteten Raum und der mindestens einen Zone, in der sich die betreffende Entität befindet, identifiziert wird.

13. Einrichtung nach einem vorstehenden Ansprüche, wobei die Steuereinheit konfiguriert ist, mindestens eine der folgenden Aktionen auszuführen:
Berechnen, für mindestens eine jeder Zone, eines Risikogewichtungswerts auf der Grundlage der Berechtigung für die betreffende Zone und der Identität jeder in dieser Zone befindlichen Entität;
Ändern einer Risikogewichtung für mindestens eine jeder Zone auf der Grundlage der Betriebsbedingungen;
Berechnen eines Risikogewichtungswerts für eine Zone, der niedriger ist, wenn sich keine Entität in dieser Zone befindet, als wenn sich eine Entität in dieser Zone befindet;
Berechnen eines Risikogewichtungswerts für eine Zone, der höher ist, wenn sich eine nicht identifizierte Entität in dieser Zone befindet, als wenn sich keine nicht identifizierte Entität in dieser Zone befindet und keine Berechtigung für die Anwesenheit nicht identifizierter Entitäten in dieser Zone zugewiesen wurde;
Berechnen eines Risikogewichtungswerts für eine Zone, der einen mittleren Wert annimmt, wenn sich eine identifizierte Entität in dieser Zone befindet und eine Berechtigung für die Anwesenheit der identifizierten Entität in dieser Zone zugewiesen wurde;
Berechnen eines Risikogewichtungswerts für eine Zone, der höher als ein mittlerer Wert ist, wenn sich identifizierte Entitäten in dieser Zone befinden und keine Berechtigung für die gleichzeitige Anwesenheit von Entitäten in dieser Zone zugewiesen wurde.

14. Einrichtung nach Anspruch 13, wobei die Steuereinheit konfiguriert ist, mindestens eine der folgenden Aktionen auszuführen:
wenn der Risikogewichtungswert einen unsicheren Schwellenwert nicht überschreitet, Bestimmen, dass die dieser Zone zugeordnete Mission wie geplant fortgesetzt werden kann;
wenn der Risikogewichtungswert einen unsicheren Schwellenwert überschreitet, Bestimmen, dass die dieser Zone zugeordnete Mission nicht wie geplant fortgesetzt werden kann; und
wenn der Risikogewichtungswert einen unsicheren Schwellenwert überschreitet, Neukonfigurieren einer oder mehrerer Zonen, um den Risikogewichtungswert zu reduzieren, und wobei die Steuereinheit vorzugsweise so konfiguriert ist, dass sie die geplante Fortsetzung der dieser Zone zugeordneten Mission durch Signalisierung eines von einem Stoppen oder einer Umleitung verhindert, und wobei die Umleitung vorzugsweise eines von einem Umleiten in eine andere Zone, einem Umleiten in einen anderen verwalteten Raum oder einem Umleiten aus dem verwalteten Raum umfasst.

15. Computerimplementiertes Verfahren zum Betrieb eines verwalteten Raums (40) zur Nutzung durch mindestens eine mobile Entität, umfassend:
als Reaktion auf den Empfang einer Anfragenachricht von einem Anfragenden, den verwalteten Raum von der mobilen Entität für einen bestimmten Zeitraum zur Durchführung einer Mission zu nutzen, Identifizieren, innerhalb des verwalteten Raums, eines nicht zugewiesenen Raums und dynamisches Erstellen mindestens einer Zone (50-90) von innerhalb des nicht zugewiesenen Raums für mindestens den Zeitraum der Anfrage zur Nutzung während der Mission.

16. Computerprogramm, das so betrieben werden kann, dass es, wenn es auf einem Computer ausgeführt wird, das Verfahren nach Anspruch 15 durchführen kann.

## Revendications

1. Appareil permettant d'exploiter un espace géré (40) destiné à être utilisé par au moins une entité mobile, comprenant :
un contrôleur (20) configuré, en réponse à un message de demande reçu d'un demandeur pour utiliser ledit espace géré par ladite entité mobile pendant une période pour mener à bien une mission, pour identifier un espace non désigné au sein dudit espace géré et pour créer de manière dynamique au moins une zone (50-90) à partir dudit espace non désigné pendant au moins ladite période de ladite demande à utiliser par ladite entité mobile pendant ladite mission.

2. Appareil selon la revendication 1, dans lequel ledit espace non désigné comprend au moins un parmi :
un espace au sein dudit espace géré qui n'a pas encore été désigné pour être utilisé par une quelconque entité pendant au moins ladite période ; et
un espace au sein dudit espace géré qui n'est pas destiné à être utilisé par ladite entité en dehors d'au moins ladite période.

3. Appareil selon la revendication 1 ou 2, dans lequel ledit contrôleur est configuré pour au moins une parmi :
créer ladite zone pendant au moins ladite période ;
créer ladite zone à partir d'un temps de début et l'étendre pendant au moins ladite période ;
créer ladite zone pendant une période tampon s'étendant au moins sur une parmi avant et après à ladite période ;
positionner ladite zone au niveau d'un emplacement qui ne chevauche pas simultanément d'autres zones ;
supprimer ladite zone et restituer l'espace associé à ladite zone à l'espace non désigné à la suite de l'expiration de ladite période ; et
supprimer ladite zone et restituer l'espace associé à ladite zone audit espace non désigné à la suite de la réception d'un message de confirmation indiquant qu'au moins une partie de ladite mission qui nécessite cette zone est terminée.

4. Appareil selon une quelconque revendication précédente, dans lequel ladite entité comprend l'une parmi une entité mobile et une entité statique, de préférence dans lequel ladite entité mobile comprend au moins une parmi une entité aérienne et une entité terrestre, de préférence ladite entité aérienne comprend au moins un parmi un véhicule aérien autonome et un véhicule aérien piloté, de préférence ladite entité terrestre comprend l'un parmi un opérateur ; un élément au sol mobile ; un véhicule terrestre autonome ; et un véhicule terrestre conduit.

5. Appareil selon la revendication 4, dans lequel, lorsque ladite entité mobile est une entité aérienne, ladite zone comprend une zone d'atterrissage/de décollage et, de préférence, dans lequel ledit message de demande comprend une indication d'un type de ladite entité aérienne et ladite zone d'atterrissage/de décollage est dimensionnée sur la base dudit type de ladite entité aérienne.

6. Appareil selon la revendication 5, dans lequel ledit contrôleur est configuré pour dimensionner ladite zone d'atterrissage/de décollage pour qu'elle occupe au moins une parmi :
une forme définie d'espace au sol qui s'étend au moins jusqu'à une empreinte au sol de ladite entité aérienne ; et
une forme définie d'espace au sol qui s'étend au moins jusqu'à une empreinte au sol d'un colis à livrer par ladite entité aérienne.

7. Appareil selon une quelconque revendication précédente, dans lequel ledit contrôleur est configuré, en réponse à des informations sur les conditions d'exploitation fournies par au moins un capteur, pour faire varier au moins une dimension de ladite zone et, de préférence, dans lequel lesdites informations sur les conditions d'exploitation comprennent au moins un parmi : des conditions météorologiques ; un statut d'entité mobile ; et des conditions d'espace géré et, de préférence, dans lequel ledit contrôleur est au moins un parmi :
configuré pour modifier au moins une dimension de ladite zone lorsqu'au moins un parmi : lesdites conditions météorologiques indiquent un changement de temps dominant ; l'état de ladite entité mobile indique un changement de précision de positionnement ; et lesdites conditions d'espace géré indiquent un changement de densité d'entités ; et
configuré pour augmenter ladite taille en agrandissant ladite zone au moins dans une direction du vent.

8. Appareil selon la revendication 4, dans lequel, lorsque ladite entité mobile est une entité terrestre, ladite zone comprend une zone utilitaire et, de préférence, dans lequel lorsque ledit type de mission comprend l'une parmi une zone de préparation, de maintenance et de recharge, ladite zone comprend une zone correspondante parmi une zone de préparation dimensionnée pour le stockage, une zone de maintenance dimensionnée pour la maintenance et une zone de recharge dimensionnée pour la recharge, chacune étant dimensionnée pour occuper une quantité définie d'espace au sol et une colonne d'espace aérien associée s'étendant à partir dudit espace au sol.

9. Appareil selon une quelconque revendication précédente, dans lequel ledit contrôleur est configuré pour au moins une parmi :
créer une pluralité desdites zones en réponse audit message de demande ;
en réponse à la réception d'une pluralité desdits messages de demande, créer une pluralité desdites zones ;
localiser chaque zone pour éviter d'occuper simultanément un espace qui se chevauche ;
positionner chaque zone au niveau d'un endroit qui ne chevauche pas les autres zones ; et
repositionner au moins une zone lorsqu'un changement de dimension d'une zone entraîne un chevauchement entre les zones.

10. Appareil selon la revendication 8, lorsqu'elle dépend de la revendication 5, dans lequel ledit contrôleur est configuré pour au moins une parmi :
créer au moins une zone de transit, chacune dimensionnée pour occuper une quantité définie d'espace au sol reliée à au moins une zone et à une colonne d'espace aérien associée s'étendant depuis ledit espace au sol et, de préférence, dans lequel ladite colonne d'espace aérien s'étendant depuis lesdites zones de préparation, de maintenance, de charge et de transit présente une altitude inférieure à celle de ladite colonne d'espace aérien s'étendant depuis la zone de décollage/d'atterrissage ; et
créer au moins une zone d'urgence au sein dudit espace géré en l'absence de toute demande d'utilisation de la part dudit demandeur et, de préférence, ledit contrôleur est configuré pour situer ladite au moins une zone d'urgence le plus loin possible de toute entité mobile au sein dudit espace géré.

11. Appareil selon une quelconque revendication précédente, dans lequel ledit contrôleur est configuré pour au moins une parmi :
allouer au moins une autorisation audit espace géré ; et
attribuer au moins une autorisation à chaque zone et, de préférence, dans lequel ladite au moins une autorisation identifie au moins une entité autorisée à être présente dans au moins un dudit espace géré et chaque zone.

12. Appareil selon une quelconque revendication précédente, dans lequel ledit contrôleur est configuré pour au moins une parmi :
surveiller ledit espace géré en recevant des signaux provenant d'entités situées à proximité dudit espace géré pour détecter la présence d'une quelconque entité ;
déterminer une identité d'une quelconque entité détectée ;
déterminer un emplacement d'une quelconque entité détectée ;
déterminer une taille d'une quelconque entité détectée ; et
déterminer ledit emplacement en identifiant au moins un parmi ledit espace géré et au moins une zone au sein de laquelle cette entité est située.

13. Appareil selon une quelconque revendication précédente, dans lequel ledit contrôleur est configuré pour au moins une parmi :
calculer un score de pondération de risques pour au moins une de chaque zone sur la base de ladite autorisation pour cette zone et de ladite identité d'une quelconque entité dans cette zone ;
modifier un score de pondération de risques pour au moins une parmi chaque zone sur la base de conditions d'exploitation ;
calculer un score de pondération de risques pour une zone qui sera plus faible lorsque aucune entité n'est présente dans cette zone que lorsqu'une entité est présente dans cette zone ;
calculer un score de pondération de risques pour une zone qui sera plus élevé lorsqu'une entité non identifiée est présente dans cette zone par rapport à lorsque aucune entité non identifiée n'est présente dans cette zone et aucune autorisation n'a été accordée pour la présence d'entités non identifiées dans cette zone ;
calculer un score de pondération de risques pour une zone, qui sera une quantité intermédiaire lorsqu'une entité identifiée est présente dans cette zone et que l'autorisation d'y être présente a été accordée à cette entité ;
calculer un score de pondération de risques pour une zone supérieur à une quantité intermédiaire lorsque des entités identifiées sont présentes dans cette zone et qu'aucune autorisation n'a été accordée pour que des entités soient présentes simultanément dans cette zone.

14. Appareil selon la revendication 13, dans lequel ledit contrôleur est configuré avec au moins un parmi :
lorsque ledit score de pondération de risques ne dépasse pas une quantité de seuil de sécurité, déterminer que ladite mission associée à cette zone est autorisée à se poursuivre comme prévu ;
lorsque ledit score de pondération de risques dépasse une quantité de seuil de sécurité, déterminer que ladite mission associée à cette zone ne peut se poursuivre comme prévu ; et
lorsque ledit score de pondération de risques dépasse une quantité de seuil dangereux, reconfigurer une ou plusieurs zones pour réduire ledit score de pondération de risques et, de préférence, dans lequel ledit contrôleur est configuré pour empêcher ladite mission associée à cette zone de se poursuivre comme prévu en signalant un parmi un arrêt et un détournement et, de préférence, dans lequel ledit détournement comprend un parmi un détournement vers une autre zone, un détournement vers un autre espace géré et un détournement loin dudit espace géré.

15. Procédé mis en œuvre par ordinateur d'exploitation d'un espace géré (40) destiné à être utilisé par au moins une entité mobile, comprenant :
en réponse à un message de demande reçu d'un demandeur pour utiliser ledit espace géré par ladite entité mobile pendant une période pour mener à bien une mission, l'identification d'un espace non désigné au sein dudit espace géré et la création de manière dynamique d'au moins une zone (50-90) à partir dudit espace non désigné pendant au moins ladite période de ladite demande à utiliser par ladite entité mobile pendant ladite mission.

16. Programme informatique exploitable, lorsqu'il est exécuté sur un ordinateur, pour réaliser le procédé selon la revendication 15.
